# EUROPEAN PATENT SPECIFICATION

(11) **EP 0 802 949 B1**
(45) Date of publication and mention of the grant of the patent: **02.05.2003**
(21) Application number: 95935738.5
(22) Date of filing: 05.10.1995
(51) Int. Cl.: C08L 53/02, C09J 153/02, C08J 9/00, B29D 29/00, D01F 6/00, D01D 11/00, D06C 3/00, B29C 69/00, A61F 13/00

(54) **ADHESIVE COMPOSITION, METHOD AND APPARATUS FOR MANUFACTURE THEREOF AND ABOSRBENT ARTICLES COMPRISING SAID ADHESIVE COMPOSTION**
KLEBSTOFFZUSAMMENSETZUNG, VERFAHREN UND GERÄT ZU DESSEN HERSTELLUNG UND ABSORBIERENDE GEGENSTÄNDE DIE DIESE KLEBSTOFFZUSAMMENSETZUNG ENTHALTEN
COMPOSITION ADHESIVE, PROCEDE ET APPAREIL DE PRODUCTION D'UNE TELLE COMPOSITION ET ARTICLES ABSORBANTS COMPRENANT LADITE COMPOSITION ADHESIVE

(30) Priority: 07.10.1994 IT TO940791; 07.10.1994 IT TO940792; 07.10.1994 IT TO940793; 07.10.1994 IT TO940798
(43) Date of publication of application: 29.10.1997
(73) Proprietor: THE PROCTER & GAMBLE COMPANY, Cincinnati, Ohio 45202 (US)
(72) Inventor: PALUMBO, Gianfranco, D-41348 Bad Homburg (DE); CORZANI, Italo, I-66100 Chieti (IT); BONELLI, Guido, I-66125 Pescara (IT)
(74) Representative: Veronese, Pancrazio
(86) International application number: US9513030
(87) International publication number: WO96011236

(56) References cited:
- EP-A- 0 211 466
- EP-A- 0 304 124
- EP-A- 0 424 295
- WO-A-93/10734
- US-A- 4 418 123
- US-A- 4 734 447
- US-A- 5 120 781
- US-A- 5 149 741
- US-A- 5 322 876
- US-A- 5 342 858

## Description

The present invention relates to an adhesive composition. More particularly the invention relates to a hot melt adhesive which also has elastic properties in the solid state while its elasticity in the molten state, as shown by its essentially Newtonian behaviour at the processing (application) temperature, is very low and in many cases negligible.

According to one embodiment of the invention the adhesive composition is in the form of a foam.

The invention further relates to threads and strips formed from a hot melt adhesive and to a process for their production.

According to a further aspect, the invention relates to an elasticated absorbent article wherein the elastication is provided by an elastomeric hot melt adhesive in the solid state.

In the manufacture of many different types of article it is necessary to bond an elastic material to a non-elastic substrate. One example is in the manufacture of disposable diapers where elastic strips are used to provide leg and waist elastication. Typically, the elastic strips consist of stretchable rubber which is fixed to the body of the diaper by layers of adhesive, for example hot melt adhesive, affixed to both surfaces.

This arrangement involves a number of difficulties. For example, the elastic strip is often covered with an anti-blocking agent such as talc during manufacture to prevent the strip bonding to itself. However, this anti-blocking agent can, in turn, render bonding of the elastic strip to the body of the article much more difficult. Furthermore, since the hot melt adhesives which are used do not themselves have real elastic properties, application of adhesive tends to "kill" the stretch of that portion of the elastic to which it is applied. Finally, the use of the two materials, rubber and adhesive, is costly.

A composition having adhesive properties on application from the molten state and preferably also pressure sensitive adhesive properties, and elasticity comparable to that of rubber, whilst also possessing suitable rheological properties for melt processing, is highly desirable since it would be capable of replacing the rubber and the adhesive used at present and would represent a considerable advance in the manufacture of articles such as diapers. Such a composition would also find numerous other applications in many diverse fields.

Many types of composition are in use commercially as hot melt adhesives and a much wider range of compositions have been suggested for use in this field. A hot melt adhesive can be defined as a composition which shows adhesive properties when applied to a substrate in the molten state. This does not preclude the composition also showing adhesive properties at room temperature, e.g. pressure sensitive adhesive properties. In general, hot melt adhesives are formulated for properties such as adhesion to a variety of surfaces, heat stability and processing properties rather than for elasticity and any attempt to increase elasticity has a detrimental effect on adhesion and other desirable properties of the composition. As yet, none of the commercial hot melt adhesive composition combines good adhesion with elastic properties comparable to those of rubber. Moreover, whilst there have been proposals to foam certain hot melt adhesives, no foamed hot melt adhesive has come into general use.

Natural rubber is generally too viscous to be used as a basis for hot melt adhesives and cured rubber cannot be melted. Many hot melt adhesives are based on thermoplastic block elastomers since these can be melted. Many such elastomers with a variety of properties are available commercially. For use as an adhesive, thermoplastic block elastomers generally have to be blended with tackifying agents to improve adhesion. Other additives such as plasticisers may also be necessary depending on the application.

Certain prior art proposals have attempted to provide hot melt adhesives which also have elastic properties. For example US-A-4 418 123 attempts to provide a self-adhering elastic having a combination of elastic and adhesive properties. The composition is defined in very broad terms as a combination of a block copolymer comprising at least one substantially amorphous rubbery polymeric mid block and at least two glassy poly(vinylarene) end blocks, together with a midblock associating resin and an endblock associating resin. All of the specific examples (with the exception of a comparative example with unsatisfactory properties) are based on styrene-isoprene-styrene block copolymers. Despite the claims made for them, as far as the present applicants are aware, none of the compositions exemplified in US-A-4 418 123 show true elastic properties comparable to those of rubber combined with good adhesion and processability (see Comparative Example A below).

Similarly EP-A-0 424 295 (HB Fuller France SARL) relates to a thermoplastic elastic intended particularly for elastication of diapers which comprises:
a) at least one synthetic rubber which is of the block copolymer type comprising at least one rubber middle block and at least two glassy end blocks;
b) 20 to 150% by weight based on the block copolymer of at least one "tackifying" resin which associates with the middle block of the copolymer;
c) 10 to 50% by weight based on the block copolymer of at least one "tackifying" resin which associates with the terminal blocks of the copolymer; and
d) 5 to 35% based on the weight of the composition of a mineral oil.

The compositions exemplified in EP-A-0 424 295 are generally based on SIS and an example of a composition based on SBS shows unsatisfactory properties (see Comparative Example B below). No examples of foams are disclosed.

It has now been found that, by careful selection of the components, hot melt adhesives can be produced having the desirable combination of properties referred to above, i.e. good adhesion from the melt (and in many embodiments also at room temperature), elastic properties comparable to those of rubber; and good processibility from the melt.

The present invention provides an elastomeric hot melt adhesive composition comprising (i) 10 to 80% by weight of at least one thermoplastic elastomer and (ii) 20 to 90% by weight of at least one tackifying resin, the thermoplastic elastomer(s) being a styrene/butadiene/styrene (SBS) copolymer or a blend of styrene/butadiene/styrene with styrene/isoprene/styrene (SIS) in which SIS is present in an amount equal to or less than 50% by weight of the total block copolymer, the composition being characterised in that:
a) it is capable of bonding, when applied from the molten state, to plastic and/or cellulosic materials with a 90° peel force of not lower than 0.5 N/cm (as herein defined).
b) it has a tensile strength retention after 50 cycles (as herein defined) of at least 40%; and
c) it has a viscosity of 120,000 cps or less at 180°C and an applied shear of 80 sec⁻¹.

It has been found that these adhesives can be presented in the form of threads or strips which is useful in the field of absorbent articles and elsewhere.

According to another embodiment of the invention the hot melt adhesive is foamed to provide a stable foam which provides further advantages.

Feature a) referred to above relates to the adhesive properties of the composition and in all cases the composition should have the properties of a hot melt adhesive in that it is capable of bonding appropriate substrates, typically plastic and/or cellulosic materials, when applied from the molten state. In particular, "capable of bonding" means that the composition is capable of showing adhesion on plastic and/or cellulosic materials sufficient especially for application in the construction of hygienic absorbent articles. When applied from the molten state between two substrates of plastics and/or cellulosic materials the composition gives a bond strength, measured as 90° peel of not lower than 0.5 N/cm. The composition at a weight of 5 g/m² is applied in the molten state between the substrates and 48 hours after bond formation the 90° peel strength is measured at 23°C and at a separating speed of 300 mm/min.

As described in more detail below, many compositions according to the invention, which may optionally be foamed, also bond appropriate substrates at room temperature and may show the properties of a pressure sensitive adhesive.

Feature b) referred to above relates to the elastic properties of the composition. The test which is used is described in more detail below and involves measuring the extent to which elastic properties are retained over 50 cycles of stretching and relaxation. The range over which the composition is stretched is related to the modulus of the composition and the likely degree of stretching of the composition in use. The figure of 40% for tensile strength retention indicates that the elastic properties of the composition are comparable with those of natural rubber and are preferably superior thereto. Preferably the tensile strength retention is at least 50%, more preferably at least 60%.

Feature c) above relates to the processability of the composition and a viscosity of 120,000 cps or less at 180°C (applied shear 80 sec⁻¹) indicates that the composition can be applied using conventional apparatus for use with hot melt adhesives. Preferably the viscosity is 60,000 cps or less, more preferably 30,000 cps or less. It is also highly desirable that the composition according to the invention show substantially Newtonian rheological behaviour, in particular viscosity does not vary significantly with applied shear. As discussed in more detail below, many compositions according to the invention show Newtonian behaviour at intended processing temperatures, e.g. around 180°C.

Compositions according to the invention, which may optionally be foamed, can be formulated with any desired modulus depending on the desired end use. However the modulus has effects on the main properties of the composition and it is convenient to divide the compositions of the invention into low modulus and high modulus compositions.

Low modulus compositions are defined as compositions having a modulus of 0.5 MPa or less at 500% elongation (six times the initial length of sample) measured at 23°C under an elongation rate of 500 mm/minute. Generally low modulus compositions have a modulus in the range 0.05 to 0.5 MPa, preferably 0.05 to 0.3 MPa. Low modulus compositions generally show good adhesive properties at room temperature and may also be pressure sensitive adhesives. These compositions are usually stretched immediately after they are formed, for example after extrusion from the melt as a strip or thread. Stretching may take place immediately before or during application to an article so that the compositions are effectively applied in the stretched state. Low modulus compositions are typically used under an elongation of 400% to 1000%.

Since low modulus compositions will usually be stretched immediately after extrusion it is desirable that they should have a relatively high setting point so that they solidify quickly on extrusion. Preferably the setting point (measured by the Dynamic Mechanical Analysis method described in more detail below) is at least 80°C, more preferably at least 100°C.

High modulus compositions are defined as compositions having a modulus of greater than 0.5 MPa at 500% elongation (six times the initial length of sample) measured at 23°C under an elongation rate of 500 mm/minute. Preferably the high modulus compositions have a modulus of from 1 MPa to 10 MPa. Since pressure sensitive adhesive character is generally inversely proportional to modulus, compositions with high modulus are often applied from the molten state although some may retain sufficient pressure sensitive adhesive character to be applied at room temperature. Application from the melt implies that the composition is applied without stretching with stretching generally taking place in use and this applies particularly to compositions with a modulus of 1 MPa or higher. For this reason high solidification temperature is less critical for high modulus compositions but for convenience these are also preferably formulated to have a setting point of at least 80°C, more preferably at least 100°C. High modulus compositions are generally used at a lower degree of stretching. They are capable of giving sufficient elastic force at low deformation (typically no higher than 50%). However, in cases where the compositions retain sufficient pressure sensitive adhesive character so that they can be applied at room temperature in a stretched state, they can be used at an elongation of up to 400%.

The essential components of the composition according to the invention are a thermoplastic elastomer and a tackifying resin and these will now be discussed in general terms.

Thermoplastic elastomers are a very interesting chemical and technological class of polymers which are distinguished by their characteristic behaviour. At room temperature they behave as cured rubbers showing high elasticity but in contrast to cured rubbers they can be melted and reprocessed in the same way as normal thermoplastics.

This behaviour results from a particular chemical structure. Most thermoplastic elastomers are block copolymers, i.e. their molecules are formed by blocks of different natures linked together. Different blocks can alternate along the chain as relatively short blocks (multiblock structure of the form A-B-A-B-A etc); or the molecules can have a three block structure of the form A-B-A where A are terminal blocks and B is a central block of a different nature (linear three block copolymers); or the molecules can have a "radial" or "star" structure represented as (AB)ₓ where all midblocks B are chemically linked together at a central point and terminal blocks A are radially disposed each at the end of block B. Structures formed by only two blocks (diblocks) of the form AB are ineffective as thermoplastic elastomers in terms of their elastic behaviour.

The chemical nature of the different blocks can be varied and the resulting copolymers can be classified for example as polyurethanes, polyesters, polyethers, polyetherester amides, etc. However, a common characteristic is the following: different blocks are physically incompatible so that they are mutually insoluble. The material can thus be considered an heterogeneous system in which different blocks, even if chemically linked in the same molecule, exist as separate entities. Blocks A of different molecules tend to associate together in microscopic regions or "domains" with the same happening for blocks B. The material so formed has an heterogeneous structure of domains A and B, each well separated, with the one present at the lower level being dispersed microscopically in the other one which constitutes a continuous phase. This continuous phase is generally formed by "soft" or rubbery blocks B which give to the material its elastic properties, while the dispersed phase A is formed by "hard" non-elastomeric blocks. Below the glass transition temperature or softening point of the hard blocks each molecule of the copolymer has its A blocks fixed in at least two points, i.e. they are "confined" in the hard domains. Accordingly, the rubbery part of the molecule can undergo stretching but without flowing relative to other molecules and when the external stretching force is relaxed it returns to its initial position for reasons of entropy.

Thus in thermoplastic elastomers, the hard blocks work as a physical vulcanization and the advantages of this processing are clear. The chemical linkages that form the vulcanized structure of a standard rubber cannot be removed by heating and at sufficiently high temperature the rubber simply begins to decompose. On the other hand, in thermoplastic elastomers heat can effectively melt the hard domains; the material can thus be melted and processed, but hard domains giving back the pseudo-vulcanization, are formed again simply by cooling the material. It is apparent from the above explanation that diblocks, which contain only one hard and one soft block, cannot contribute to elastic properties.

Diblocks can improve processibility but their content in the material must be confined within certain limits so that they do not reduce elasticity to an unacceptable extent. In addition, the total amount of hard blocks is important; too low a content will give poor elastic properties (similar to an insufficiently cured rubber), whereas too high a content will make the material behave as a very hard, supercured rubber, again with very poor elasticity.

Amongst thermoplastic elastomeric block copolymers, the so called Styrenic Block Copolymers (SBC) are well known and widely used in many applications on account of their very good properties. Styrene block copolymers as a class are described for example in Thermoplastic Elastomers: A Comprehensive Review, Legge, Holder & Schroeder (Eds), Hauser Publishers (1987), Chapters 3, 4 and 12(1). They can have the structures already mentioned above as:
- multiblock A-B-A-B-A-B- ..etc.
- linear triblock A-B-A
- radial or "star" polymers (AB)ₓ where x > 2.
A represents a "hard" block of a vinyl-arene polymerized monomer, generally styrene or alpha-methyl-styrene; and B represents a "soft midblock" generally formed by a rubbery monomer such as poly(butadiene), (isoprene), (ethylenebutylene) or (ethylene-propylene) rubbers.

The content of diblock molecules A-B in such products can be as high as 80% by weight and in special commercial products can even form the totality of the polymer. These products are used for particular applications because, for the reasons discussed above they have no or very poor elastic properties. Diblocks can help processing and improve adhesive properties but in order to retain good elastic characteristics their content in the thermoplastic elastomeric block copolymer should be kept lower than 40% by weight.

SBC's are widely used as substitutes for vulcanized rubbers, their hardness, modulus and general mechanical and elastic properties being strongly related to the content of hard blocks, formed especially by polystyrene. They have also found use as base polymers for hot melt adhesives because of their generally good mechanical characteristics, easy tackification of their rubbery midblocks and good thermal stability which make them superior to traditional bases for hot melts such as ethylene-vinylacetate copolymers. However the main object of standard compositions has been to optimize adhesive properties with retention of at least some of the elastic properties, typical of the base polymer, not being taken into account.

Thermoplastic elastomeric block copolymers known as SBC's, typically have the following characteristics:
- They are formed by two kinds of monomers each polymerized in blocks of the same monomer units, the blocks being distinct even if chemically linked inside the copolymer molecule. Moreover the two kinds of blocks must be mutually incompatible.
- The structure according to which the two kinds of present blocks are linked in the molecule can be:
   - alternating multiblock as .... A-B-A-B-A-B....
   - triblock linear as A-B-A
   - radial or star structure as (A-B)ₓ where x > 2.
- "A" represents blocks of a polymer derived from a vinyl-arene monomer, typically styrene or alpha-methyl-styrene. They are called hard blocks because at room temperature these polymeric species are hard, glassy and fragile materials being under their glass transition temperature (Tg). Typically useful constituents for hard blocks have Tg well above room temperature and preferably higher than 90°C.
- "B" represents blocks of a rubbery polymer having a Tg < 0°C and preferably < -40°C.
Typically these "soft" blocks are formed by rubbers such as polybutadiene and polyisoprene.

In the common technological lexicon the resulting thermoplastic elastomeric block copolymers are often referred to by the abbreviations SBS and SIS respectively. As already discussed in terms of the mechanism of the generation of elastic properties in these type of polymers, and particularly the function of hard blocks in giving a physical vulcanization to the polymer, useful SBC's contain at least two hard blocks "A" per molecule and at least one soft block "B". Molecules formed by one block of A and one block of B (the so called diblocks) should, for use in the present invention, be kept lower than 40% by weight in the base polymer.

It is widely recognised in the literature that differences exist between SIS and SBS copolymers which are relevant to the formulation of hot melt adhesives. SBS copolymers generally cost less than comparable SIS copolymers and SBS copolymers can be synthesized to exhibit better elasticity than comparable SIS copolymers. However it has not hitherto been possible to take advantage of these potentially advantageous properties of SBS copolymers as a result of the fact that SBS copolymers have not generally shown adequate adhesive properties and SIS copolymers are much easier to tackify. For this reason hot melt adhesives have generally been formulated using SIS copolymers as the predominant SBC. Both US-A-4418123 and EP-A-0424295, which are discussed above, clearly prefer SIS as the SBC on which the compositions are based and neither document discloses a composition based on SBS which has satisfactory properties.

It has been found according to the present invention that compositions in which SBS copolymers are the main styrene block copolymer(s) can be produced with satisfactory adhesive properties whilst at the same time retaining the advantages of SBS copolymers with respect to elasticity which have been mentioned above. Thus, compared to compositions based on other SBC's, compositions can be formulated according to the present invention with better elastic properties, quicker elastic return, more flat stress/strain diagrams even at elongations > 1000 % and give compositions of better processability (more Newtonian rheological behaviour). However, it should be noted that direct comparison between SIS and SBS based compositions is very difficult since the compositions need to be formulated in different ways. Accordingly, it would not generally be possible to substitute an SBS copolymer for an SIS copolymer in a hot melt composition and obtain satisfactory properties and other adjustments need to be made to the formulation depending on the nature of the SBC in order to obtain optimum results. The way in which compositions according to the invention should be formulated to obtain the desired properties is discussed in more detail hereinafter.

Thus the compositions according to this invention are based on SBS copolymers or a blend of SBS/SIS in which SIS is present at levels equal or less than 50% by weight of the total block copolymer.

All thermoplastic elastomers can be processed in the molten state using various technologies and in various apparatus, in all cases showing in the solid state properties similar to those of a cured rubber. Potentially all thermoplastic elastomers can be made adhesive. Some adhere well enough in the molten conditions to different substrates. However it is clearly highly desirable to obtain thermoplastic elastomers which are capable of adhering at room temperature or at only moderately elevated temperature to various substrates.

Thus, whilst pure thermoplastic elastomers have some adhesivity at high temperature, this adhesivity can be conveniently enhanced both in terms of the strength of the bonds formed with different substrates and in terms of the range of temperatures at which strong bonds are formed.

This enhancement is obtained by the use of at least one suitable tackifying resin. More particularly, much better adhesive properties and even self adhering properties at room temperature (pressure sensitive behaviour) can be obtained by blending thermoplastic elastomers with the materials known as tackifying resins which, as a class, are well known in the literature.

When thermoplastic elastomers are assembled at room temperature (e.g. because it is desired to pre-stretch them in the solid state and bond under tension) it is necessary that they exhibit the typical behaviour of true pressure sensitive adhesives and this generally requires a blend of a thermoplastic block elastomer and tackifying resin. It should be noted that in order to enhance the adhesive properties of the thermoplastic elastomer (both at high temperature and at room temperature), only the soft (rubbery) blocks of its molecule should be modified by the tackifying resin. Thus, only interactions between the soft (rubbery) blocks and a resin, substantially compatible with them, causes the generation of tack; while the eventual modification of hard blocks with a resin never leads to the development of adhesive behaviour.

Not only do the hard blocks not exhibit any adhesive activation but their eventual modification by a tackifying resin could "soften" their mechanical strength. This risks impairing their ability to function as "centers of physical vulcanization" for the elastomer, consequently destroying elastic behaviour.

So, for the various thermoplastic block elastomers, depending on the chemical nature of their soft and hard blocks, suitable tackifying resins can be identified which must be compatible (i.e. soluble and capable of creating the appropriate physical modification of the system) only with the soft or rubbery blocks, whilst compatibility with the hard blocks is as low as possible or even zero, in order to retain as much as possible of primary elastic properties of the polymer. However, the amount of tackifying resin must be controlled since the addition of quantities of tackifying resin(s), which are too large, even if the tackifying resin is compatible only with the midblocks (soft blocks) and fully incompatible with the hard blocks, could still impair the elastic properties of the resulting formulation. In any case, the addition of the resin constitutes a dilution of the concentration of the hard block domains, weakening their ability to function as centers of "physical crosslinking" for the elastomer. Thus both the content of hard domains in the base thermoplastic block elastomer and the content of the elastomer in the final formulation must be such to ensure a sufficient final concentration of hard domains in the formulation to retain appropriate levels of "physical vulcanization" and thus of elastic properties.

Therefore, on the one hand, it is important to control the final concentration of hard blocks in the composition. On the other hand, the addition of resin(s) which are compatible only with the hard blocks and their domains, is completely ineffective in the development and/or improvement of adhesive properties. Resins compatible with the hard blocks will, by swelling the hard domains, stiffen the composition, increase modulus and (compared to similar levels of tackifying resins compatible with the midblock) will tend to increase viscosity. In a system already containing a tackifying resin compatible with the soft domains, the addition of resins compatible with the hard domains will also decrease the adhesivity. Accordingly, in general terms, only limited quantities of resins compatible with the "hard blocks" can be used without too great an impairment of the overall properties of the adhesive elastic hot melt. Generally they will only be used in special cases, for example, if an additional increase in modulus is required for some applications; or (using high softening point hard block compatible resins) if a higher setting temperature or a better temperature resistance is desired.

The compositions according to the invention can be used to elasticate structures in which they are applied without the use of any glue, for example structures where elastication is obtained conventionally by elastic formed of vulcanized rubbers. One material (the adhesive elastic hot melt) can substitute for the use of two materials (the rubber and the glue to fix it) with a substantial saving in costs. Normally rubber elastics are covered with talc to prevent sticking of the elastics in the packaging. Talc can give rise to problems at the stage of adhesion with glues.

Moreover the thermoplastic, adhesive elastic hot melt can be directly extruded in varied geometrical forms directly during the construction of products which are to be elasticated. It can be extruded as strands or yarns, as bands, as films, etc. Structures such as bands or films can be also foamed before the extrusion, obtaining elasticated structure which are particularly soft.

As mentioned previously, according to the invention the composition may be extruded as threads or strips. Threads are generally extruded from nozzles of rounded cross-section, preferably nozzles with a circular cross-section of diameter for example from about 0.4 mm up to about 3 mm or more. A number of threads can be extruded together from separate nozzles and by rotating all of the nozzle heads relative to a common axis the threads can be brought together to form a strand. Strips are generally obtained by extrusion from a nozzle in the form of a slot. The nozzle head may contain one or more blades and strips of different sizes can be obtained by varying the pattern of the blade(s) in the head.

Elastication can be also applied according to non-linear (curved) geometries which makes the anatomical fitting, of the product comprising the elastication, to the wearer's body particularly good. This is very difficult to obtain with standard rubber yarns of ribbons. Under different geometrical forms the adhesive elastic hot melts can be applied both in an already stretched or an unstretched state. In the first case the extruded melt is cooled immediately after the extrusion die and stretched at the desired elongation. In this case it is advisable that it possesses the following properties:
- a relatively high setting point so that it solidifies immediately after the extrusion and can be elastically stretched. An elastic stretching can be given only to a solid material, because any force applied to a molten or semisolid material will cause only a plastic lengthening along the direction of force without any elastic tension.
- good pressure sensitive properties of adhesion because the adhesive elastic hot melt will contact the substrate(s) when already cold, e.g. at room temperature.

When the material is applied without any prior elastic stretching and directly contacted to the substrate(s) to which it has to adhere at the outlet of the extrusion die, pressure sensitive behaviour is less important because bonding is made when the material is still above room temperature. In this case besides the geometrical forms mentioned above, the material can be applied to the substrate(s) e.g. by spraying or fiberization or by similar processes obtaining a network of interconnected short fibers or a network of fibers having indefinite length which can have both a random or a geometrically regular network structure (e.g. each fiber can form a spiral).

All these features are particularly suitable for the elastication of hygienic, absorbent articles, although the potentialities of the materials according to the invention are clearly not limited to these applications. The use of materials applied in an already stretched form can substitute for all of the presently used rubber elastics in baby and adult diapers, in catamenials, etc. when it is desired to have parts of the product already under elastic tension offering, as a result of their extreme versatility, the possibility of new elasticated structure of practically infinite variety. In this case, another advantage of elastic, adhesive hot melts over rubber elastics is worthy of note. As will be shown in more detail below, the preferred elastic hot melt compositions have a stress/strain diagram that is much flatter than a rubber elastic, i.e. even if already under tension a further stretching (e.g. due to the movements of the wearer of the absorbent article) causes a very low increase in modulus and in the tensile strength that is perceived by the wearer. This is especially true for low modulus compositions.

Compositions according to the invention that are more conveniently applied, e.g. to absorbent articles, in the unstretched state are typically used to give elastic return to structures/products only when the whole final structure/product is subject to some deformation during use. Normally in this case the typical deformations that are given in use to an absorbent article are very limited, e.g. of the order of 5-50%. Accordingly, it is necessary that the adhesive, elastic hot melt contained in these structures is able to respond with a sufficient elastic return force to external stresses even at these low elongations. For these applications, it will be generally more convenient to use formulations at higher modulus.

In summary the use of thermoplastic block elastomers, in different physical forms and with different application processes, for the elastication of structures and particularly of hygienic articles, is very advantageous.

For example, the compositions according to the present invention may be in the form of threads or strips. The composition according to the present invention may be in the form of foams.

According to a further embodiment, the invention provides an elasticated absorbent article wherein the elastication is provided by an elastomeric hot melt adhesive composition as previously defined.

The formulations of the present invention show optimum properties, typical of hot melts, ranging from compositions that can more conveniently be strongly bonded to substrates at high temperature from the melt to about 50°C, to compositions that retain a permanent strong adhesivity on most substrates even at room temperature being true pressure sensitive adhesives. Moreover the compositions are characterized by retention of distinct elastic properties from the base thermoplastic block copolymer, showing all of the typical behaviours that define an elastomeric material in the technological sense.

Thus when stretched in the solid state and when the stress is relaxed they will return quickly to their initial length with only minor permanent (plastic) deformation. The formulations preferably having a distinct pressure sensitive character, can be applied even at room temperature, both in the unstretched or preferably in the stretched state for the elastication, in different geometrical forms in various items and particularly in absorbent, hygienic products such as baby and adult diapers or adult incontinence products different from diapers or feminine catamenials. Compositions having lower pressure sensitive character will be more conveniently be applied at temperature over 50°C, in the stretched or preferably in the unstretched state for the elastication of the same structures and products. In particular when applied in the unstretched state they will work at limited extension, e.g. up to 50% (i.e. final stretched dimension = 1.5 times initial dimension).

In order to show even at these low extensions a distinct elastic return force, these formulations will generally have a higher modulus than the previous ones, the two kinds of materials being, in fact, the extremes of one field of formulations all of which are both excellent hot melt adhesives and retain excellent elastic properties, the passage from one to another being gradual.

As already indicated, compositions according to the invention can be divided into "low modulus" and "high modulus" formulations, this distinction being based on their modulus value and on their behaviour as pressure sensitive adhesives.

Thus the present invention is concerned with a family of compositions based on at least one thermoplastic elastic block copolymer in which SBS copolymers are the main polymer(s) and at least one tackifying resin essentially compatible with the soft (rubbery) blocks of the aforementioned copolymer, the tackifying resin being used mainly to prove adhesivity, both at high and at room temperature of the aforementioned copolymer. The compositions are extrudable and in the solid state retain a distinct elastic behaviour typical of elastomers from which they are derived. As typical examples and without any limitation, these compositions can be extruded and applied in the form threads, yarns, bands, continuous films, networks of fibers both continuous or having a finite length and in which fibers have both a random orientation or a geometrically regular conformation etc. As examples of applications in the field of absorbent articles, they can be used for the leg elastication of diapers, as elastic waistband in the same, for the elastication of catamenials and of adult incontinent products other than diapers, for the internal elastication of the structures of all the aforementioned products, for reinforcement under mechanical stress of their absorbent cores and for giving them stretchability and resiliency etc.

A lower modulus generally means that adhesive materials have a more aggressive adhesivity, so that the low modulus formulation generally have higher tack typical of pressure sensitive adhesives. They are able to form very strong bonds with many substrates on simple contact even at room temperature or in any case lower than 50°C.

Ratios between hard and soft blocks in the base thermoplastic elastomeric copolymer are very important in determining the elastic behaviour and the mechanical and adhesive properties.

Generally the higher the content of hard blocks (that conventionally will be referred to as "styrene content") the higher the modulus, the more evident are elastic properties, the quicker is elastic return after relaxation of stretching but the lower is adhesivity and especially pressure sensitive behaviour. All this is true provided that the level of hard blocks does not become so high that it forms the continuous phase and the material becomes a hard and no longer elastic material.

Useful SBC's can contain from 10 to 50% of styrene by weight. However, when modified with the tackifying resin, the behaviour of the resulting composition will be clearly governed, in terms of all of the aforementioned properties, by the resulting content of styrene or of hard blocks in the compositions; so that it is determined both by the level of styrene in the base copolymer(s) and by the content of copolymer(s) in the final composition. Too low a level of final block styrene will give poor elastic properties. Too high a level will increase the modulus and decrease the adhesivity to an unacceptable extent. Increasing final styrene level in the composition by increasing the content of copolymer(s) will increase excessively the viscosity and decrease processability. So both the level of copolymer(s) in the composition and their content of styrene should be chosen to optimize the final styrene content and thus all the above mentioned properties. Optimum ranges will be indicated below.

If desired the rubbery part of the SBC can itself be cured (in a similar manner to the curing of natural or synthetic rubbers) by using suitable chemical or physical means, in particular curing systems known for synthetic rubber which are not activated by heat. This will have the effect of increasing the modulus of the overall composition.

The tackifying resin is added mainly to improve adhesive properties of the base copolymer(s) even to the extent of arriving at the typical behaviour of a pressure sensitive adhesive. Moreover it improves the processability of the thermoplastic elastomer both by giving to that composition lower absolute values of viscosity (as compared to the pure block copolymer) and a rheological behaviour that, at the indicated levels of resin is practically Newtonian, i.e. the viscosity is dependent only on temperature and does not change with applied stress, a property which is very advantageous for easy processing. It is known that SBC's which have many very interesting characteristics, may be difficult to process as a result of non-Newtonian behaviour in the molten state as pure materials. This means that not only do they show very high viscosity but also, under the influence only of temperature, they do not appear to melt even at very high temperatures near 200°C. They can even begin to thermally decompose before showing a distinct fluid state. In order to make them flow and so to be able to process them, it is necessary to apply temperature and high mechanical stress. In any case processing of pure SBC's is difficult, viscosities are high and highly dependent on the combination of temperature and applied stress.

The basic composition of SBC and tackifying resin according to the present invention are capable of giving materials which, whilst retaining very good elastic and adhesive properties, are also easily processable because of both relatively low viscosities and of practically Newtonian (or acceptable Newtonian-like) rheological behaviour. This latter property was measured as variation at constant temperature (180°C) of the viscosity under two levels of applied shear rate, 20 and 80 sec⁻¹. The ratio of these two viscosities is hereinafter called the "Newtonian Index" (N.I.).

An ideal Newtonian fluid should have N.I. = 1 while a pure SBC could have, in the same conditions an N.I. even > 6; i.e. the viscosity variation, only due to the variation of applied shear rate from 20 to 80 sec⁻¹ is more than 6 times which can cause severe problems for regular and easy processing. For easy processability it is necessary that the compositions have only limited variation of viscosity at constant temperature with variation of applied shear rate.

More particularly according to the present invention, it is preferred that compositions show a Newtonian or almost Newtonian rheological behaviour based on the molten material at 180°C, by comparing the viscosities under a shear rate of 20 and 80 sec⁻¹. Preferred compositions do not show a variation in viscosity > 50% i.e. a ratio between viscosities (N.I.) not higher than 1.5.

It has been found that the most preferred compositions based on SBS's have an almost ideally Newtonian behaviour, with an N.I. not higher than 1.05.

In order to retain sufficiently the elastic properties of the base polymer it is necessary that the tackifying resin is compatible mainly with and preferably essentially only with, the soft, rubbery blocks of the block copolymer and does not interfere to a significant extent with hard blocks. This is governed both by the chemical nature of the resin and by its molecular weight. The compatibility of the resin with the rubbery blocks and its incompatibility with the hard blocks can be measured, for example, by determining the variation of Tg of soft and hard blocks deriving from the addition of resin. In particular, incompatibility with the hard blocks is considered satisfactory if their Tg (originally at 100°C if they are formed from polystyrene) is not changed more than 15°C by the addition of 100 parts of resin to 100 parts of copolymer. Measurements of the two Tg's requires appropriate equipment. Accordingly both the experience of formulators and the technical literature of resin suppliers can be taken into account to determine which tackifying resins are chemically compatible with the soft blocks and incompatible with the hard blocks of SBC's. As used herein, the term "compatible essentially only with the soft blocks" means that a tackifying resin is compatible with the soft blocks of the copolymer and is incompatible with the hard blocks to the extent that Tg of the hard blocks is not significantly changed and more preferably decreased by no more than 15°C on admixture of 100 parts of tackifying resin to 100 parts of copolymer. Preferably the Tg of hard blocks is not decreased at all.

More specifically the tackifying resin will be chosen from the following chemical groups which have high compatibility with soft blocks of SBC's and low or no compatibility with their hard blocks;
- hydrocarbon resins
- aliphatic resins
- polyterpene resins
- terpene phenolics
- synthetic C5 resins
- synthetic C5/C9 resins
- rosins and rosin esters
as well as their totally or partially hydrogenated derivatives. They can be used as the pure resin or also in blends.

When more than one resin is used, the main tackifying resin system, defined as the essential resin/blend of resins present at least at a level of 50% of the total amount of resin, are characterised by having a softening point between 85 and 150°C and more preferably between 100 and 140°C (all softening points being measured by the well known Ring & Ball (R & B) method).

Tackifying resins having softening point < 85°C are considered to have a prevailing plasticizing effect which may in any case be important for the development of good adhesive and elastic properties but is to be distinguished from the tackifying effect. This is due to the fact that in the processing of the present elastic hot melt compositions quick setting of the material after extrusion is desirable, especially for compositions which are to be stretched before application on the substrate, which is clearly possible only with solid materials. For this reason it is desirable that the setting point of these compositions is not less than 80°C and more preferably greater than or equal to 100°C.

Setting point is most accurately determined by using the technique known as Dynamic Mechanical Analysis under sinusoidal stress, which is well known in the science and technology of polymers and adhesives. According to this technique three main rheological parameters of the material are determined as a function of temperature:
- elastic or storage modulus G'
- the viscous or loss modulus G''
- the angle δ (delta) and its tangent, being the phase shift between G' and G''.

G' is higher than G'' when the material is solid. When the material is fluid G'' becomes higher than G'. Naturally, G' is higher at low temperature and the reverse at high temperatures. The crossing temperature between G' and G'' is taken as the true rheological solidification (or melting) point of the material.

For use according to the present invention, it is preferable that the crossover temperature for the composition is greater than or equal to 80°C and more preferably greater than or equal to 100°C.

The position of the crossover point is dependent on many physical parameters of the hot melt. However, it has been found that the main influence is the softening point of the main tackifying resin and a secondary influence is the content and molecular weight of the copolymer. So the tackifying resin should preferably have a softening point from 85 to 150°C and more preferably from 100 to 140°C provided that in any case the overall composition has a true rheological solidification temperature at least of 80°C and more preferably at least of 100°C.

Besides the thermoplastic elastomeric block copolymer and the main tackifying resin, compositions can contain additional components which improve specific properties. A more detailed description of the compositions and of their principal properties is given below.

For practical reasons of clarity of description, further description will relate specifically to "low modulus" and "high modulus" compositions.

The low modulus compositions are elastic, extrudable, adhesive compositions based on at least one thermoplastic elastomeric block copolymer, suitably modified by the proper addition of at least one tackifying resin essentially compatible with its soft blocks. The polymer, or at least the polymer present at the highest level, is a polystyrene/polybutadiene block copolymer. In this embodiment the compositions according to the invention have a modulus of 0.5 MPa or less, essentially from 0.05 MPa to 0.5 MPa and preferably less than or equal to 0.3 MPa; the modulus being measured at 23°C at 500% elongation (six times the initial length of sample) under an elongation rate of 500 mm/minute. Moreover the compositions have viscosities at 180°C and with an applied shear rate of 80 sec⁻¹ of 120000 centipoise (cps) or less and preferably 60000 cps or less and more preferably 30000 cps or less.

The low modulus compositions contain from 10 to 80% by weight, and preferably from 15 to 50% by weight, of SBC or of a blend of SBCs having the following characteristics:
- a molecular structure that can be multiblock, linear or radial (star) provided that it contains per molecule, at least two hard-blocks formed by a vinyl-arene polymer and preferably polystyrene or poly-alpha-methyl-styrene, and at least one soft or rubbery block, the soft block of the SBC, or of the SBC present at the highest level, being polybutadiene. The diblock content in the SBC(s) should be kept lower than 40% by weight.
- the aromatic content (conventionally referred to hereinafter as "block styrene content") of the SBC(s) can vary from 10 to 50% by weight and preferably from 20 to 50% by weight. However in order to retain significant elastic properties, both the SBC(s) level in the final composition and the block styrene content thereof should be chosen so to have a final styrene content in the composition from 3 to 17% by weight and preferably from 6 to 15% by weight.

The composition also contains tackifying resin or a blend of the same essentially compatible with the soft blocks of SBC.
The resins belong to the chemical groups known as:
- hydrocarbon resins
- aliphatic resins
- polyterpene resins
- terpene phenolic resins
- synthetic C5 resins
- synthetic C5/C9 resins
- rosin and rosin esters
as well as their totally or partially hydrogenated derivatives thereof.

The tackifying resin/blend of resin has/have a R&B softening point from 85 to 150°C and preferably from 100 to 140°C. The level of such resin/blend of resin in the composition can be from 20 to 90% by weight. However, in a preferred embodiment the content of resin/blend of resin described above is from 30 to 55% by weight the remainder being formed by the additional components described below which enhance elastic and/or adhesive properties.

In any case both the level and the softening points of the tackifying resin/blend of resins as well as those of additional components described below will be chosen so that the final composition has a true rheological setting temperature (measured as crossing temperature of G' and G'') not below 80°C and preferably not below 100°C.

It has also been found that adhesive and/or elastic and/or mechanical properties of the binary blends SBC/tackifying resin can be improved by using additional components.

Adhesive properties can be enhanced by adding limited quantities of high molecular weight rubbers such as polyisoprene, polybutadiene, polyisobutylene, natural rubber, butyl rubber, styrene/butadiene rubber (SBR) or styrene/isoprene rubber (SIR) and blends thereof. These polymers have high viscosities and, in the uncured state, have poor elastic properties. However, adding them in quantities up to 15% by weight of the formulation and using polymers with Mooney viscosities ML (1+4) at 100°C from 30 to 70, the resulting compositions show improved pressure sensitive adhesive properties whilst still retaining final viscosities within a useful range and without any detrimental effect on final elastic properties. A particularly suitable SBR is the product sold by Enichem under the trade name EUROPRENE SOL 1205 and by Fina under the trade name FINAPRENE 1205. This product is described as an SBR in which styrene is partially distributed in blocks. Of the total styrene content of 25% by weight, from 15 to 18% has a block structure and the remainder is randomly co-polymerised with the butadiene.

Plasticization of the composition can have very good effects not only on the adhesive properties and-on the viscosity but can also even improve elastic behaviour by reducing the internal (molecular) frictions that dissipate elastic energy during stretching and subsequent relaxation. In general, the composition may contain up to 40% by weight of plasticizer(s).

In a preferred embodiment, the compositions contain at least one of the following plasticizers:
- up to 40% by weight of a tackifying resin with a softening point from 50 to 85°C,
- up to 20% by weight, and preferably up to 15% by weight, of a liquid hydrocarbon resin, rosin ester or polyterpene resin with a softening point not higher than 30°C,
- from 3 to 30% by weight and preferably from 5 to 15% by weight of a paraffinic or naphthenic mineral oil having an aromatic content of less than 10% by weight in order not to interfere with the styrenic domains,
- up to 15% by weight of a liquid polyisoprene or depolymerized natural rubber or polyisobutylene, polybutene or polypropylene oils and the liquid copolymers thereof, for example PARAPOL (Exxon), or LIR (from KURARAY).

The amount of plasticizer should be such that the setting temperature is not lowered beyond the limit referred to above. In a preferred embodiment the total plasticizer content in a low modulus formulation is not less than 10% by weight and not higher than 40% by weight.

In low modulus compositions, the use of aromatic resins, which have no effect on adhesive properties, which interfere with the hard blocks of SBC's and which stiffen the composition and tend to increase viscosity, is generally not desirable and the preferred level of aromatic resins is zero. However, limited quantities of an aromatic resin or a blend of aromatic resins, for example 20% by weight or less, more preferably 10% by weight or less can be used as a reinforcement for compositions which have low total styrene content (say up to 6%) or which include significant amounts of SIS, for example 30% by weight or more of SIS based on the total SBC(s). In fact SIS copolymers, especially the ones which have a styrene content < 30% by weight when diluted into the composition by resin and other additives, can show an inadequate (too low) modulus and poor characteristics of elastic return as a result both of the intrinsic lower modulus of SIS and the low concentration of styrene, acting as a physical vulcanizing agent. In this case the aromatic resin can both increase modulus to a useful level and increase the density of hard domains, that are swollen by the resin. Useful aromatic resins have a softening point from 115 to 160°C and are chemically identified as derivatives of styrene, alpha-methyl-styrene, vinyl-toluene, coumarone-indene and copolymers thereof; alkyl-aryl resins etc.

Apart from the components discussed above the compositions can contain the usual additives such as antioxidants, U.V. inhibitors, pigments and colouring materials, mineral fillers etc. Generally in a total amount up to 20% by weight.

Without limitation as to their most suitable processing and use, the low modulus formulations are typically used in the stretched state at typical extension levels of 400-1000%. They are characterized by very high elongation at break (over 1100% and often over 1400%) and very good adhesive, often pressure sensitive adhesive properties.

In order to simulate the application of the composition into an absorbent article, pressure sensitive adhesive properties were measured as loop tack (or "Quick Stick Tack") and 90° peel according to the standard methods FINAT Test Method No 9 for the loop tack and FINAT test Method No 2 for the 90° peel, modified as defined herein.
- For both tests the compositions were applied on a polyester film at a weight of 80 g/m².
- Adhesive properties, both as loop tack and 90° peel, were measured on a polyethylene film fixed on the standard test plate.
- Loop tack values were expressed as peak values, ignoring the initial peak.
- The 90° peel was evaluated after compression by a 400 g roll passed back and forth, i.e. two passes, one in each direction, and measurements were made 20 minutes after contact of adhesive and polyethylene.

The compositions according to the invention generally have a loop tack > 5 N/cm and 90° peel > 7 N/cm (separating speed = 300 mm/min). Materials which can usefully be bonded and assembled at room temperature into a hygienic product are considered to be those which show on polyethylene loop tack > 2.5 N/cm and 90° peel strength > 3 N/cm.

High modulus formulations are elastic, adhesive, extrudable compositions similar to those described previously and having the following characteristics:
1) They have a modulus higher than 0.5 MPa and more preferably not lower than 1 MPa up to 10 MPa.
2) At 180°C and with an applied shear rate of 80 sec⁻¹, they have viscosities of 80000 cps or less preferably 50000 cps or less and more preferably 35000 cps or less.
3) They are based on the same types of SBC's referred to previously, but which have a final block styrene content in the composition of from 15 to 30% by weight and preferably from 15 to 25% by weight.
4) The SBC or blend of SBC's which is used has a diblock content not exceeding 25% and preferably not exceeding 10%. The most preferred polymers are those with no content of diblocks such as those marketed by DEXCO Co under the trade name VECTOR.
5) The preferred SBC(s) contain from 20 to 50% by weight of styrene and the preferred level of SBC or blend of SBC's in the composition is from 35 to 75% by weight, provided that both the styrene content of SBC's and their level in the composition are such as to match the requirement of point 3) above about final styrene content.
6) The tackifying resin/blend of tackifying resins has/have the same chemical and physical characteristics as already discussed above. However, the preferred content is from 20 to 40% by weight.
7) The content of high molecular weight rubbers such as polyisoprene polybutadiene, polyisobutylene, natural rubber, butyl rubber, SIR and SBR should not exceed 10% by weight and preferably is less than 5% by weight based on the total composition.
8) The total content of plasticizers, as previously described should not exceed 25% by weight.
9) Aromatic resins or blend of the same are still preferably avoided for their detrimental effect on adhesive and stress/strain properties (steeper stress/strain diagrams; generation of a yield point and consequently of an unrecoverable plastic deformation). However, as in the previous case, these materials can be present at levels up to 20% by weight with acceptable properties in the composition provided that the non-adhesive/non elastomeric part of the composition does not exceed 50% by weight of the total composition. This non-adhesive/non-elastomeric part is formed by the sum of the total styrene content in the composition plus the content of aromatic resin/resins.

Other requirements and other possible further components and additives remain the same. In particular it is still required that the true rheological setting temperature (measured as the crossing point between G' and G'') is not lower that 80°C and preferably not lower than 100°C.

Again with no limitations on their processing and use, these high modulus compositions are often applied in the unstretched state, especially the ones having moduli > 1 MPa. This preferred use is due to the fact that they are capable of giving sufficient elastic return forces even at low deformations (typically not higher than 50%) which are often met during use of stretchable hygienic articles which can conveniently be made elastic and resilient in this way. This is also due in part to the fact that assembling with the composition in the stretched state implies the need to apply the composition at about room temperature and so requires that it adhere strongly to substrates even in these conditions (pressure sensitive adhesive properties). The pressure sensitive character of adhesives tends to be inversely proportional to their elastic modulus.

However, some of the high modulus compositions according to the invention still retain distinct and useful pressure sensitive behaviour (loop tack on PE > 2.5 N/cm; 90° peel on PE > 3 N/cm) and can be applied also at room temperature and in the stretched state at typical elongations up to 400% with the elongations at break of these compositions typically over 900%.

Adhesive properties are measured under the same conditions as for low modulus compositions.

The unexpectedly good level of elasticity of the compositions according to the invention can be measured as retention of tensile strength after cyclic deformation. This is a test that simulates conditions in use on a hygienic article where the movements of the wearer can cause further and subsequent elongations of the elasticated parts which, for optimum behaviour, must regain their initial length with only minor losses of tensile strength. All the compositions are tested starting from an already stretched state and are given a further elongation of about 15% of the initial stretched length, in order to simulate movements of the wearer. The compositions were cyclicly stretched and released fifty times from the initial elongation to the further stretched elongation.

The % retention in tensile strength at the initial elongation after 50 cycles of stretching at a speed 500 mm/minute, compared to the initial tensile strength, was taken as a measure of the elasticity of the materials. Tests were performed at room temperature on bands 2.54 cm wide.
- Low modulus compositions were stretched at an initial elongation typical of intended applications of 800% and then cyclicly further stretched and released 50 times between 800 and 920% (ie from 9 to 10.2 times the initial length of the sample).
- High modulus compositions were tested in the same manner but at an initial elongation typical of intended applications of 300% and under 50 cycles of further elongation and relaxation between 300 and 345%.

The term "tensile strength retention after 50 cycles" as used herein refers to the test described above. A natural rubber vulcanized elastic produced by the company JPS Elastomerics which is used in the leg elastication of diapers and applied at an initial stretched deformation of 220% was taken as a reference and was cyclicly deformed 50 times between 220 and 255%. It was found that under these conditions the natural rubber vulcanized elastic, after 50 cycles, had an average retention of tensile strength equal to 47% of the initial tensile strength at 220%. This level of retention of tensile strength was considered indicative of good elastic behaviour.

More generally it was observed that materials that do not lose more that 60% of their initial tensile strength in these test conditions, show good elastic behaviour. Retention of tensile strength less than 40% represents unsatisfactory elasticity as indicated by slow return to the initial length after release of stretching, high permanent plastic deformations etc.

As will be shown in the following examples, compositions according to the invention, both low and high modulus, show good elastic behaviour, at the same level or better than the natural rubber vulcanized elastic.

More specifically high modulus compositions retained up to 67.5% of their initial tensile force and low modulus compositions up to 59.8%.

Elastic properties were also judged by the following method: The compositions in the form of bands 2,54 cm wide, were tested at 23°C and at a stretching speed of 1000 mm/minute, with 3 cycles of elastic hysteresis between zero and a typical possible elongation in application i.e. 800% for low modulus and 300% for high modulus compositions. The elastic energy of each cycle evaluated as the area of the cycle was recorded and the ratio between the elastic energy of the third and the first cycles was determined as retention of elastic energy after 3 hysteresis cycles. For good elastic behaviour it is believed that under these test conditions, a retention of elastic energy not lower than 30% is required.

The present invention also provides a process for the preparation of threads or strips of an elastomeric hot melt adhesive composition which comprises extruding a composition, as defined herein, onto a moving surface, cooling and optionally drawing the threads or strips.

The process can be carried out using an apparatus which comprises extrusion means, a moving surface positioned such that the threads or strips contact the surface on exit from the extrusion means, and a cooling system arranged to cool the threads or strips. After cooling, the threads or strips on the moving surface may then be brought into contact with a continuous web of raw material so that the threads or strips are transferred to the raw material. In its basic form, apparatus of this type, but in which the adhesive is extruded directly onto the intended substrate, is already known and has been used for the application of threads or strips of conventional hot melt adhesives. It is a surprising advantage of the present invention that elastomeric hot melt adhesives can be produced as threads or strips by the use of essentially the same apparatus as has already been used for conventional hot melts.

The raw material may be, for example, a material suitable for use in the production of absorbent products such as diapers and catamenials. Transfer of the threads or strips from the moving surface to the raw material with the raw material moving faster than the moving surface effects the transfer with elastic stretching of the threads or strips.

As mentioned, the process produces both threads and strips, however, for convenience reference will be made at certain points hereafter to threads although the description, with appropriate modification where required, also applies to strips.

The composition is preferably extruded from a hot melt applicator, which applicator is fed from a tank containing the composition via a suitable conduit such as a pipe or hose. The applicator comprises one or more extrusion heads each having an aperture for extrusion of one or more threads. The moving surface, which is preferably a conveyor belt, passes below the extrusion heads, preferably set at a distance of from about 1 mm for strips up to about 200 mm for threads. The conveyor belt may even be in contact with the extrusion head. Alternatively the moving surface may be a roll which is preferably chilled in order to provide the necessary cooling of the threads or strips when they are in contact with the roll.

The extrusion heads may be controlled by a mechanical system, which system regulates the angular position of the head and allows movement thereof about the x, y and/or z axes the y axis for this purpose being that along which extrusion takes place. By adjusting the angle of the head about the x axis (the axis along which the threads are conveyed by the moving surface) the deposition of the lines of threads onto the moving surface may be controlled and in particular the distance between the lines of threads from each head on the moving surface may be adjusted. Adjusting the angle of the head about the z axis enables the point of extrusion of the thread on to the moving surface to be altered and adjusting the angle of the head about the x axis enables the distance between the individual threads to be altered. Preferably the heads are set such that the lines of threads are at an appropriate distance apart which is required for the article being produced. Partial rotation of a series of extrusion apertures about a single common axis brings the threads closer together up to the point at which the threads coalesce to form a strand.

The extrusion heads extrude the composition in threads, for example, having a diameter of from about 0.4 mm to about 3 mm or more, preferably from 0.8 to 1.5 mm and more preferably less than or equal to about 1 mm. The diameter of the thread extruded from the head may be altered by varying the diameter of the aperture(s) in the head. It will also be appreciated that the shape of the aperture in the head will determine whether a thread or strip is produced. By altering the aperture size in the head, and thus the diameter of the thread, the adhesive force of the thread may be altered and in addition the cooling time of the thread is altered. The larger the diameter of the thread the slower it will cool. The diameter of the thread will thus be varied according to its desired use.

The moving surface, e.g the conveyor belt, will generally be composed of or coated with a material to which the thread or strip adheres sufficiently to prevent the thread or strip stretching whilst it is so adhered. This enables the thread or strip to cool without plastic deformation. However, adhesion to the moving surface will be less than adhesion to the intended substrate so that the thread or strip can subsequently be detached from the moving surface and transferred to the substrate with elastic stretching. For example the moving surface may be coated with a non-adherent material including fluorocarbon polymers such as polytetrafluoroethylene and preferably silicones such as silicone rubbers. In the case of such non-adherent materials, friction between the moving surface and the thread or strip is generally sufficient to prevent stretching of the thread or strip whilst it is in contact with the moving surface.

The moving surface, which is preferably a conveyor belt, may be driven by a mechanism, preferably mechanical, by which the speed of the belt may be varied. Variation in the speed of the belt is necessary in order to adjust the elastic stretching which occurs between the conveyor belt and the raw material to which the threads or strips are to be applied, this stretching being achieved by the difference in speed between the conveyor belt and the raw material. Varying the speed of the conveyor belt relative to the rate of extrusion of the composition may also be useful in that it is thereby possible to draw the threads or strips, although since the threads or strips are still molten at that stage, only a permanent reduction in section can be achieved by such drawing. The ratio between the rate of travel of the belt and the extrusion rate should be at least one to one (no drawing) and can be up to, for example, about 1.5:1, preferably 1.3:1, more preferably 1.2:1, if a drawing effect is required. It is also possible to provide the extrusion head with a device which regulates the extrusion rate of the hot melt composition relative to the speed of the belt in order to ensure a constant diameter of the threads in the case of variation in the speed of the belt, for example variation required to adjust the degree of elastic stretching.

The threads are cooled whilst they are on the conveyor belt. Cooling is preferably achieved using an air blowing system which is placed such that it cools the threads. Preferably the blowing system is placed beneath the belt. It has surprisingly been found that a blowing system is capable of providing sufficient cooling for the threads to cool and set very rapidly without the need for prolonged cooling. However, the conveyor belt must be of sufficient length so that the threads have a sufficient time thereon to be cooled. The length of the belt may be determined according to space available and the threads may pass over substantially the entire length of the belt or may pass over only a portion of the belt depending on the length of the belt and the cooling time required. In addition the air blowing system may be adjusted to cool the threads at a faster or slower rate as required. This varies the extent to which the interior of the threads and strips have been cooled by the time of transfer to the raw material and thus the extent to which the threads or strips are subjected to elastic stretching as opposed to plastic deformation.

After cooling and optionally drawing the threads are transferred to a raw material, for example, a top sheet for an absorbent article. Transfer may be achieved by means of a silicone idler roll which is preferably pneumatically activated. The roll brings the raw material into contact with the threads. The threads adhere to the raw material and are continuously fed from the conveyor to the raw material. As already indicated, the raw material is preferably moving at a faster rate than the conveyor belt so that the threads are provided with an elastic stretching on transfer to the raw material. Due to the adhesivity of the thread and the nature of the raw material the threads remain adhered thereto. Optionally, the threads may subsequently be pressed onto the raw material by means of one or more rollers to ensure that the threads remain attached to the raw material.

This pressing may take place directly on to the threads in which case the rollers should be coated with a non-adherent material, for example PTFE or preferably a silicone. More preferably the pressure can be applied after a second sheet of raw material has been applied to the threads in which case a non-adherent coating is unnecessary. In both cases, the roller can be heated to assist adhesion, although the temperature should be well below the melting point of the composition in order not to affect its elastic properties. In practice, about 10 to 40°C below the rheological setting temperature of the composition (measured as described herein) is appropriate.

In order to provide the threads with non-linear (curved) geometry they may be passed through one or more combs prior to being transferred to the raw material. The comb(s) govern the position of the thread on the raw material. The combs must be able to move in a plane which is substantially parallel to the plane of the raw material. The comb(s) are preferably moved via a cam. By moving the comb in a plane substantially parallel to the plane of the raw material the threads, having passed through the comb(s), can be transferred to the raw material in a curved geometry.

On transfer to the raw material the thread has a tendency to debond therefrom as the thread attempts to resume a linear geometry and the higher the degree of curvature of the thread the greater is the tendency to debond. In order to prevent debonding, a non-adherent roller of the type referred to above may be passed over the curved threads to press them on to the raw material so that the threads remain bonded to the raw material in curved form.

The curved threads are preferably used in diapers although they may be used in catamenials. The curved thread allows the diaper, for example, to have a better anatomical shape which makes it more comfortable for the wearer.

It has surprisingly been found that threads of the present invention have considerable advantages over previously used rubber elastication. In particular the threads of the present invention can be formed with a smaller diameter than the previously used rubber elastication, and can also be drawn to smaller diameters before they are set. In particular the thread may have an initial diameter of less than or equal to about 1 mm on the conveyor belt before application to the raw material. Following elastic stretching on application of the thread to the raw material, the thread may have a diameter of about 0.3 to 0.2 mm, which corresponds to a stretching of about 10 to about 25 times the initial length. The modulus of elasticity of the thread is much lower than that of conventional rubber elastication and thus enables the thread to be stretched more readily than conventional rubber elastic. Obviously a single thread provides a lower stretching force than a number of threads and thus the number of threads can be readily adjusted to provide the requisite stretching force.

Another advantage of the threads of the present invention over conventional rubber elastication is that they will stick to the raw material without the use of glue. This is of particular advantage for curved threads. When rubber is applied to a raw material in curved form, a substantial quantity of glue is required to hold the rubber in the curved form and this can have an adverse effect on the elastic properties of the rubber. Use of a smaller amount of glue in order to avoid this adverse effect leads to the retention force of the rubber to the raw material being lower than the elastic force of the rubber itself since a rubber elastic has a higher modulus as compared to the elastic hot melt adhesives used according to the present invention and moreover elastic hot melt adhesives can be applied in thinner threads as compared to rubber elastics. For these reasons, the rubber elastic generally seeks to regain its linear form and thus debonds readily from the raw material. The elastic hot melt adhesives used according to the present invention have a much lower modulus than that of traditional rubber elastics and may be stretched in very thin threads which adhere to the raw material without the need for additional glue. Their adhesive force is consequently higher than the debonding force, and the threads remain adhered to the raw material in curved form.

It will be well within the capability of the person skilled in the art to ascertain the optimum parameters for the thread in any particular case, and for example these need to take account of the modulus of the composition, the diameter of the thread, the adhesion of the thread to the raw material and optionally the radius of curvature. The adhesion will depend on the composition used and whether the thread is pressed onto the raw material.

It has also been surprisingly found that should the thread break on transfer to the raw material, the broken end of the thread can readily be picked up and transferred to the raw material to rejoin the break and the manner in which this can be accomplished is described in more detail below.

The invention will now be described in more detail with reference to a specific embodiment of an apparatus suitable for forming threads formed from an elastomeric hot melt adhesive composition according to the invention. This apparatus is illustrated in the accompanying drawings in which:
Figure 1 shows an apparatus used to produce curved threads and to transfer the threads to a raw material; and
Figure 2 shows a schematic diagram of the apparatus of Figure 1 together with equipment used to produce a hygienic disposable product more specifically a disposable baby diaper.

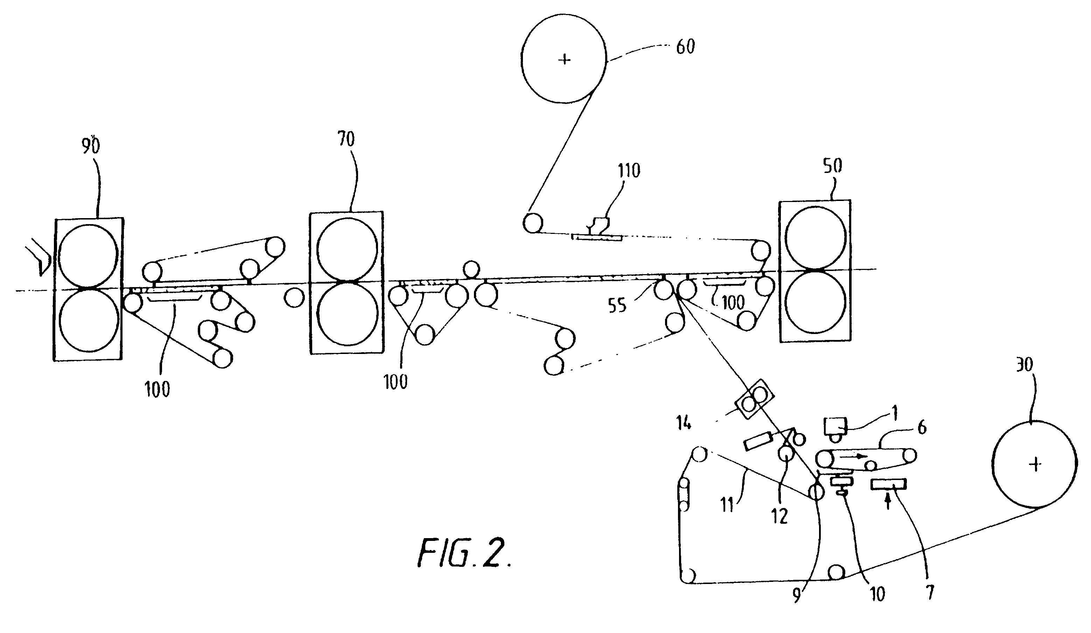

Naturally, the apparatus shown in Figure 2 can be modified to produce other elasticated disposable hygienic products.

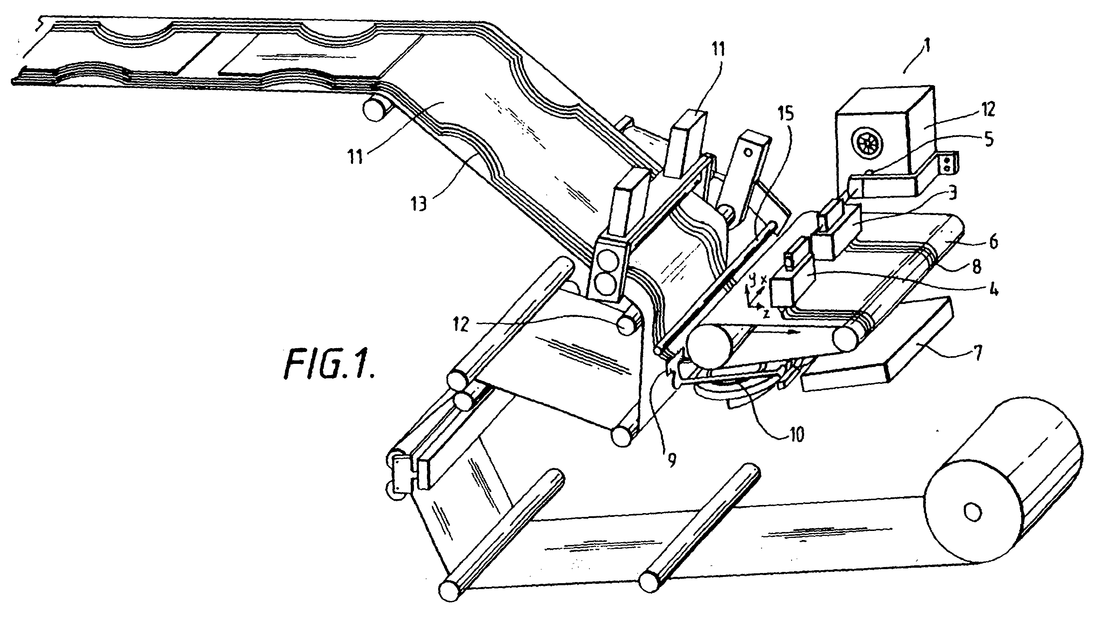

### Referring to Figure 1:

Figure 1 depicts an apparatus for forming threads and in particular depicts a hot melt applicator shown generally as (1) which comprises extrusion heads (3,4) fed from a tank by a suitable hose. For clarity in depiction of the remaining parts of the apparatus the tank and hose are not shown. Placed beneath the extrusion heads (3,4), and not in contact therewith, is conveyor belt (6) which moves in the direction as shown in the figure by an arrow. Speed of travel of the conveyor belt (6) is adjustable by means of a mechanical speed regulator (2) and the angular position of the extrusion heads can be regulated by an adjustable mounting (5) . Beneath the conveyor belt (6) is a fan (7) which cools the threads (8) which are extruded from heads (3,4) onto the conveyor belt (6). Four threads (8) are depicted in the drawing although the number of threads can, of course, be varied in accordance with the particular product being made. The threads (8) are curved on exit from the conveyor belt (6). The threads (8) pass from the conveyor (6), via one or more combs (9), on to a raw material (11) which material is brought into contact with the threads (8) by means of a silicone first idler roll (12). Curvature is achieved by means of the comb(s) (9) which are moveable in a plane parallel to the plane of raw material (11). The movement of the combs (9) is achieved by a cam (10). The position of the first idler roll (12) is activated pneumatically. The threads (8) adhere to the raw material (11) with the threads (8) in a curved geometry as shown at (13). Silicone rolls (14) press the threads (8) onto the surface of the raw material (11).

Second idler roll (15), which is preferably silicone coated, is positioned adjacent to the silicone roll (12) but on the opposite side of the raw material and in contact with the threads being transferred to the raw material. First and second idler rolls (12) and (15) are moved by the same pneumatic system. Second idler roll (15) does not press the threads against the raw material (which is achieved by subsequent rollers (14)) but simply ensures the correct angle of contact between the threads and the raw material during the transfer from the conveyor belt (6).

On start up of the apparatus or should a break occur in one or more of the threads being transferred to the raw material (11), the first idler roll (12) moves towards the conveyor belt (6) and brings the raw material (11) into contact with the threads (8) upon it. At the same time, the combs (9) may be lowered in order not to interfere with the movement of the first idler roll (12). The threads (8) thus adhere to the raw material (11) and can be stretched in the normal manner when the first idler roll (12) comes back to its usual position.

The desired degree of elastic stretching of the threads on application to the raw material (11) is achieved by the difference in speed between the conveyor belt (6) (which is also the speed of the threads prior to application) and the raw material (11) itself. As already noted the speed of the conveyor belt (6) can be adjusted by means of the speed regulator (2).

Figure 2 is a schematic diagram of the apparatus of Figure 1 depicting equipment and materials used to form a disposable baby diaper. The same reference numerals are used for components shown in both Figure 1 and 2.

As shown in Figure 2, a non-woven used as top sheet for the disposable baby diaper is fed from roll (30) as raw material (11). The raw material (11) passes in proximity to the conveyor (6), by virtue of first idler roller (12), and the threads (not shown in Figure 2) are transferred to the raw material in the manner described in more detail above in connection with Figure 1 by hot melt applicator (1). The raw material (11) with threads is passed to point (55) where it is joined by core material from a core supply and cut unit (50) and back sheet from a roll (60) to form a composite material. The composite material then passes through an optional crimp unit (70) in which the various elements are pressed in order to improve adhesion particularly around the perimeter. Thereafter the material passes through a final cut unit (90) to form the final product. It is to be noted that at various points in this process the components of the final product have conventional hot melt adhesive (110) applied thereto and pass through vacuums (100).

The upper left part of Figure 1 shows the elastic hot melt adhesive applied in a curved path to form leg elastication for the diaper. Positioning of the absorbent cores onto the raw material, achieved by core supply and cut unit (Figure 2, (50)) is also shown in more detail although for clarity the core supply and cut unit is omitted from Figure 1 as is the back sheet with its supply roll (Figure 2, (60)).

As already indicated conventional rubber elastics cannot be applied satisfactorily to raw materials with non-linear geometry and it is an important feature of the present invention that elastomeric hot melt adhesives can be applied to a raw material substrate with non-linear, e.g. curved geometry.

The present invention also provides a process for the production of foams. For the production of foams, the compositions described above can extruded in various desired forms, for example in the form of a strip, and foamed at the moment of extrusion by use of conventional foaming technology to provide an adhesive foam. The foamable composition is generally extruded at a temperature at which it is molten, for example at from 130 to 230°C, and foaming can be effected by physical or chemical means. Foaming by physical means involves use of an inert gas or an inert liquid. For example an inert gas such as nitrogen or carbon dioxide can be blown under pressure into the molten composition. Alternatively, an inert volatile liquid, such as methylene chloride, can be included in the composition which then evaporates at the extrusion temperature and acts in the same way as the inert gas. Foaming by chemical means involves use of a chemical blowing agent such as diazocarbonamide which decomposes at the extrusion temperature to release sufficient amounts of gas to foam the extruded composition. Preferably the foaming is achieved using an inert gas.

Immediately following blowing and extrusion the composition is cooled, generally by natural cooling to room temperature, to stabilise the foam. At the same time the blowing action helps cooling and stabilises the walls of the cells of the foam and helps in setting up the foam. The apparent modulus of the foamed composition can be adjusted to a required value by varying the density of the foamed mass, for example by varying the quantity of blowing agent or the pressure where the foaming agent is a gas blown directly into the molten composition.

If required, the composition can be foamed and extruded on-line in the production of an article into which the foamed composition is to be incorporated to yield a foamed elastic, for example in the form of a strip, which is sufficiently adhesive to bond to the body of an article, for example the body of a diaper. Strips of the elastic/adhesive material foamed according to the invention produced in this way can be used in those applications where two materials (an elastic foam, for example a polyurethane foam, and an adhesive) have been used previously with consequent savings in cost, increased assembling efficiency and better performance of elasticated portions of the article. In addition, for use, for example, in the waistband of a diaper a foamed elastic adhesive has the advantage that for a given contact area and a defined elastic force, the weight of the foamed elastic adhesive is lower than the weight of a non-foamed composition performing the same function with consequent cost saving. The foamed structure is also thicker but at the same time softer.

As mentioned above the present invention also provides an elasticated absorbent article wherein the elastication is provided by an elastic adhesive composition as disclosed herein.

The absorbent article may be a baby diaper, a diaper for incontinent adults, an incontinence garment, a sanitary napkin, a pantiliner, etc. The adhesive composition may provide elastication to the article in, for example, the waist or leg area of a diaper or generally in any area where elastication is required.

The present invention will now be illustrated with reference to a diaper, although this should not be considered as in any way limiting on the overall scope of the invention.

In the accompanying drawings:

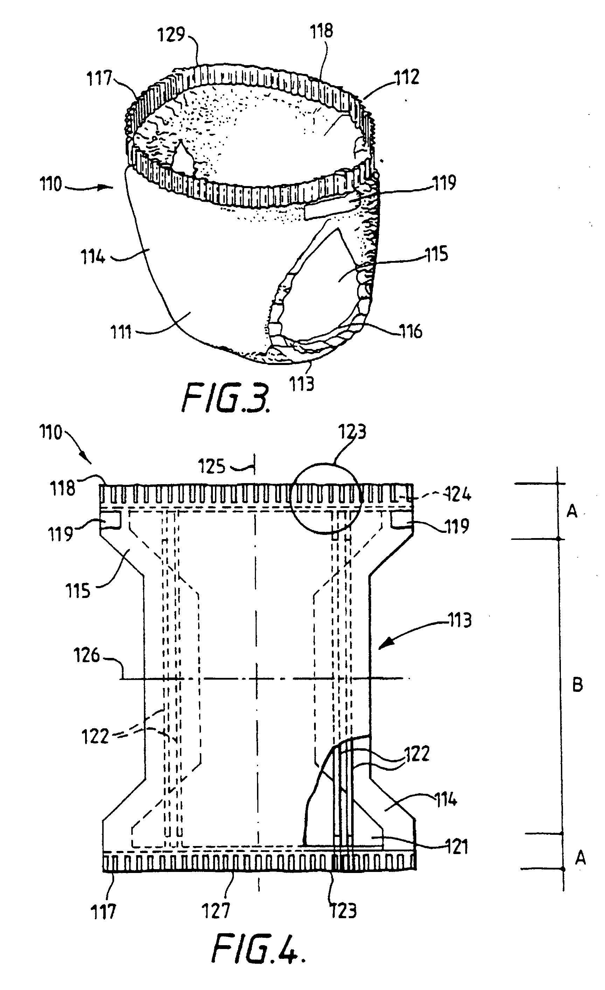

Figure 3 is a perspective view of a diaper.
Figure 4 is a partially cut away plan view of the disposable diaper of Figure 3 opened out into planar configuration.

Disposable diapers having many different basic designs are known to the art and reference can be made, for example, to U.S. Patent Re 26152, U.S. Patent 3860003, European Patent Application No. 82200801.7, U.S. Patent 4324245, U.S. Patent, 4337771, U.S. Patent 4352355 and U.S. Patent 4253461.

The diaper illustrated in Figure 3 is based on the disposable diaper design disclosed in US Patent 3860003. The diaper shown in Figure 3 is merely for illustration and it will be appreciated that the present invention can be applied to any other design of diaper.

Figure 3 depicts a disposable diaper indicated generally as 110 which is shown in perspective in a configuration as if it were applied about an infant. Disposable diaper 110 comprises a front portion 111 and a rear portion 112 with a crotch portion 113 interposed therebetween. In use, crotch portion 113 is placed between the legs of the infant and front portion 111 and rear portion 112 are placed, respectively, along the front and rear lower portions of the wearer's trunk. Topsheet 115 forms the inner surface of disposable diaper 110 while backsheet 114 forms its outer surface. Side flaps (or leg cuffs) 116 fit about the wearer's thighs. In use, front waistband 117 and rear waistband 118 are placed adjacent the wearer's waist regions on, respectively, the front and rear portions of the wearer's trunk. Disposable diaper 110 is held in position about the wearer by fastening tape 119. Outer margin of waistband 129 is shown in Figure 3 as the upper edge of disposable diaper 110.

Figure 4 is a partially cut away plan view of disposable diaper 110 opened out into a planar configuration. Topsheet 115 is, in this illustration, the upper surface of the diaper while backsheet 114 is the lower surface. Absorbent element 121 is interposed between topsheet 115 and backsheet 114.

As illustrated, disposable diaper 110 is generally symmetrical about longitudinal center line 125 and lateral center line 126. While this is a preferred configuration, it is not necessary that disposable diaper 110 be symmetrical. An asymmetric orientation about lateral center line 126, as when crotch portion 113 is transposed toward front waistband 117, is quite useful.

Disposable diaper 110 is provided with elastic members 122 in the side margins thereof running generally parallel to longitudinal center line 125. In the embodiment illustrated, two elastic members 122 are placed on either side of disposable diaper 110; single or multiple elastic members can be used.

Fastening tapes 119 are secured to disposable diaper 10 adjacent rear waistband 118.

Front waist elastic element 123 and rear waist elastic element 124 are positioned, respectively, in front waistband 117 and rear waistband 118 and adjacent outer margin of waistband 127. In the embodiment illustrated in Figures 3 and 4, disposable diaper 110 comprises elastic waist elements in both the front and the rear waistbands. The elastication could however be only in the front or rear waistband.

The elastication 123 and 124 as shown in Figures 3 and 4 extends across essentially the entire lateral width of disposable diaper 110. The elastication 123, 124 may only extend across a portion of the lateral width of the diaper. Preferably they extend across a major portion of the lateral width of the disposable diaper. The elastication 123, 124 is provided by the elastomeric hot melt adhesive as described herein.

One major function of backsheet 114 is to prevent body fluids from escaping from disposable diaper 110 and soiling the wearer's outer garments and other surfaces in contact with the disposable diaper. Any compliant, non-irritating planar material which is impermeable to body fluids can be used as backsheet 114. Conventional materials may be used as a back sheet, for example those as described in the aforementioned patents and application concerning diapers. A preferred backsheet is formed from polyethylene film having a thickness of from about 0.012 to about 0.051 millimetre (mm) .

Breathable backsheets (i.e. backsheets that permit the passage of vapor and air while preventing the passage of liquid) useful in the present invention are described in, for example, US 3156242, US 3881489, US 3989867, US 4341216.

The size of backsheet 114 is dictated by the exact diaper design selected and the size of the infant intended to be the wearer; it can be readily ascertained by those skilled in the art.

Topsheet 115 can be any compliant, soft feeling, non-irritating (to the wearer's skin) planar material. It functions to contact the wearer's skin, to receive fluid discharges, to allow the discharges to pass readily therethrough into the absorbent element, and to isolate the wearer's skin from the fluids in the absorbent element. To aid in effective performance of the last function, the topsheet is preferably hydrophobic.

Topsheet 115 can be a permeable layer made from natural or synthetic fibers or mixtures thereof, non-woven fabric made from natural or synthetic fibers or mixtures thereof, apertured plastic film, porous foam, or the like. Examples of suitable topsheets are described in the aforementioned patents and patent application.

A preferred topsheet is spun bonded non-woven polyester fabric made from fibers of from 2.2 to 2.5 denier, having a basis weight of 17 grams (g) per square meter (M²). Another preferred topsheet material has a basis weight of 22 g per M² and comprises 65% (by weight) staple length, 1.5 denier polyester fibers (such as Kodel type 411 polyester fibers as sold by Tennessee Eastman Corporation, Kingsport, Tennessee) 15% crimped, staple length, 1.5 denier rayon fibers; and 20% acrylic copolymer binder (such as Celanese CPE 8335 as sold by Celanese Corporation of Charlotte, North Carolina). "Staple length" refers to fibers having a length of at least 15 mm.

Still another preferred topsheet is constructed from polypropylene fibers which have been carded and thermally bonded in a spaced-apart pattern. Fibers 3.8 centimetres (cm) long and of from 1.5 to 3.0 denier are suitable. A preferred topsheet of this type has a basis weight of 24 g per M².

Suitable topsheets can also be constructed from apertured plastic films such as those described in U.S. Patent 4342314, U.S. Patent 4341217 and U.S. Patent 3929135.

As with the case of backsheet 114, the size of topsheet 115 is dictated by the exact diaper design selected.

Absorbent element 121 can be any means which is generally compressible, conformable, non-irritating to the wearer's skin, and which is capable of absorbing and retaining fluids.

Absorbent element 121 can be constructed from any of a variety of materials commonly used in disposable absorbent articles and which are described in the hereinbefore incorporated patents. Examples of suitable absorbent materials include creped cellulose wadding, absorbent foams, absorbent sponges, super absorbent polymers, and, preferably, comminuted and airlaid wood pulp fibers commonly referred to as absorbent fluff. An absorbent fluff having a density of from 0.05 to 0.175 g per cm³ is generally acceptable.

As in the case of backsheet 114 and topsheet 115, the size of absorbent element 121 is dictated by the exact diaper design selected.

Optionally, absorbent element 121 can have associated with either or both planar faces envelope tissues (not illustrated in the drawings) comprising any permeable material well known to those skilled in the art, such as wet strength tissue paper. When used, envelope tissues are generally coextensive with absorbent element 121 and either coterminous therewith or folded up and about the laterally extending margins thereof. Envelope tissues can optionally be secured to absorbent core 121 by any means well known to those skilled in the art.

Absorbent element 121 is interposed between backsheet 114 and topsheet 115. The diaper design selected determines whether or not the three elements are coterminous although, in general, either backsheet 114 or topsheet 115 or both extend beyond the margins-of absorbent element 121.

Optionally, backsheet 114 can be secured to absorbent element 121 by any convenient means (not illustrated in the drawings) well known to those skilled in the art. Examples of suitable means are parallel beads of adhesive (such as hot melt adhesive) and double sided adhesive tape; each extend essentially the entire longitudinal length of absorbent element 121. The backsheet 114 and absorbent element may be secured together using the elastomeric hot melt adhesive as disclosed herein.

Elastic members 122 serve to contract or gather the cuffs (longitudinally extending margins) of disposable diaper 110 and maintain them in contact with the legs of the wearer thereby providing improved fit and reducing fluid leakage from the diaper. The elastic members are provided by the elastomeric hot melt adhesive as disclosed herein.

The length of elastic elements 122 is dictated by the precise diaper design chosen. In the design illustrated in Figures 3 and 4, elastic elements 122 extend a major portion of the longitudinal length of disposable diaper 110, but terminate outside the waist regions of disposable diaper 110.

Elastic members 122 are affixed to the disposable diaper 110 in a stretched or unstretched state, during or after production of the diaper. For example, disposable diaper 110 can be contracted in crotch portion 113, for example by pleating) and elastic members 122 can be affixed to the contracted disposable diaper 110 while the elastic members are in their relaxed or unstretched orientation.

Front waist elastomeric element 123 and rear waist elastomeric element 124 are each formed of elastomeric hot melt adhesive material as disclosed herein.

The elastication on the diaper may be provided by the elastomeric hot melt adhesive as disclosed herein in the form of threads, yarns, bands, strips, continuous films, networks of fibers both continuous or having a finite length and in which the fibers have both a random orientation or a geometrically regular orientation. The threads or strips may be in linear or non-linear (curved) geometry. The adhesive may also be in foamed state.

As will be shown in the following examples, compositions which provide elastication in absorbent articles according to the invention, both low and high modulus, show good elastic behaviour, at the same level or better than the natural rubber vulcanized elastic.

More specifically high modulus compositions retained up to 67.5% of their initial tensile force and low modulus compositions up to 59.B%.

Compositions for use according to the invention are illustrated by the following examples.

In the case of proprietary products, details of their nature and composition is that provided by the manufacturer.

The compositions of all of Examples 1 to 5 are suitable for the elastication of absorbent articles in accordance with the invention with deactivation of elastic tension in areas where elastic properties are not required. The compositions of all of Examples 1 to 5, when applied from the molten state between plastics and/or cellulosic materials at a weight of 5 g/m² showed a bond strength well in excess of 0.5 N/cm.

Elastic properties were also judged by the following method: The compositions in the form of bands 2,54 cm wide, were tested at 23°C and at a stretching speed of 1000 mm/minute, with 3 cycles of elastic hysteresis between zero and a typical possible elongation in application i.e. 800% for low modulus and 300% for high modulus compositions. The elastic energy of each cycle evaluated as the area of the cycle was recorded and the ratio between the elastic energy of the third and the first cycles was determined as retention of elastic energy after 3 hysteresis cycles. For good elastic behaviour it is believed that under these test conditions, a retention of elastic energy not lower than 30% is required.

The conditions required to deactivate the elastic tension of the compositions described in the following examples can be calculated theoretically based on the elastic modulus of the composition i.e. as explained above a temperature at least equal to the inversion temperature must be applied in the absence of the application of pressure or a lower temperature can be used provided that pressure is applied at least equal to the elastic modulus at that temperature. However in practice deactivation will be in a processing apparatus, for example by use of a heated roll and in this case the conditions that need to be applied, for example, the temperature of the roll and the clearance between the rolls which determines pressure, will vary depending on other processing conditions such as the thickness of the material and the speed at which it is being passed through the apparatus. Thus, for example, based on elastic modulus, the composition of Example 4 below can be deactivated at 90°C by application of a pressure of 0.02 MPa. However in practice it would be necessary to determine empirically the conditions (roll temperature and clearance between the rolls) to be used to achieve deactivation.

### EXAMPLE 1

An SBC polymeric system based on SBS (styrene-butadiene-styrene block copolymers) was formulated as follows:

| | |
|---|---|
| CARIFLEX TR-4113 S | 36% by weight |
| EUROPRENE SOL 1205 | 8% |
| DERCOLYTE A 115 | 45.8% |
| FORAL 85-E | 6% |
| HERCOLYN D-E | 4% |
| IRGANOX 1010 | 0.2% |

where:
- CARIFLEX TR-4113 S is an oil-extended SBS copolymer available from SHELL Co said to contain:
   68.5% by weight of a linear triblock SBS having a styrene content of 35% by weight and with a diblock content < 20% by weight
   31.5% by weight of a naphthenic mineral oil, acting as a plasticizer, and containing less than 5% of aromatics.
- EUROPRENE SOL 1205 is a styrene/butadiene rubber (SBR) available from ENICHEM. (The product FINAPRENE 1205 available from FINA is similar and could equally be used.) It is described as a solution polymerised SBR having a Mooney viscosity ML (1+4) at 100°C equal to 47 and a total styrene content of 25% by weight. This styrene as partially (typically from 15 to 18%) distributed in blocks with the remainder being randomly copolymerized with butadiene. The randomly copolymerized styrene gives the rubbery part of the molecule the chemical structure of an amorphous SBR, which contributes to the development of particularly good pressure sensitive adhesivity.
- DERCOLYTE A 115 (the main tackifying resin)is available from DRT. It is a polyterpene resin derived from alpha-pinene having a softening point of 115°C.
- FORAL 85-E is a tackifying resin composed of a hydrogenated glycerol ester of rosin available from HERCULES Co. It has a softening point of 85°C.
- HERCOLYN D-E is a liquid methyl ester of rosin available from HERCULES.
- IRGANOX 1010 is a phenolic antioxidant available from CIBA-GEIGY.

The composition was found to have the following properties:
- total styrene content = 10.6% by weight of which 10.1% is in blocks
- viscosity at 180°C at 80 sec⁻¹ = 20520 cps
- intrinsic modulus at 500% elongation - 0.182 MPa (low modulus)
- elongation at break > 1400% (1400% was the maximum elongation achievable on the machine used for this determination)
- rheological setting temperature (crossover point of G' and G'') = 125°C
- 90° peel on PE = 16.3 N/cm
- tensile strength retention after 50 cycles between 800 and 920% = 59.8%
- elastic energy retention after 3 hysteresis cycles between zero and 800% = 57.7%
- Newtonian Index (N.I.) = 1.05.

The composition showed extremely good elastic and adhesive properties and was considered completely suitable for elastication of structures, particularly hygienic absorbent articles. It was easily processable i.e. extrudable, having quick setting (stretchable on line) and having good pressure sensitive characteristics allowing the formation of strong bonds on simple contact with many substrates even at room temperature.

The composition is foamed to varying foam densities using a commercially available foaming apparatus intended for hot melt compositions (FOAMMELT apparatus produced by Nordson, Germany). Foaming was carried out using nitrogen under pressure as the blowing agent at a temperature of 180°C and gas pressure was adjusted to give foams of varying densities. The flow rate of the elastomeric hot melt was about 1-2 grams per minute and the foam produced was about 1 cm thick depending on the foam density.

The following properties have measured on the foamed composition:

| **Density** | **Apparent Modulus** |
|---|---|
| 0.94 g/cm² | 0.182 MPa |
| 0.83 g/cm² | 0.162 MPa |
| 0.79 g/cm² | 0.136 MPa |
| 0.69 g/cm² | 0.113 MPa |
| 0.52 g/cm² | 0.058 MPa |

### EXAMPLE 2

The formulation was:

| | |
|---|---|
| CARIFLEX TR-4113S | 38.8% by weight |
| FINAPRENE 1205 | 8.9% |
| DERCOLYTE A115 | 26% |
| FORAL 85-E | 26% |
| IRGANOX 1010 | 0.3% |

The following properties were measured:
- total styrene content = 11.5% by weight of which 10.9% is in blocks
- viscosity at 180°C at 80 sec⁻¹ = 28180 cps
- intrinsic modulus at 500% elongation = 0.188 MPa (low modulus)
- elongation at break > 1400%
- rheological setting temperature = 120°C
- 90°C peel on PE = 10.4 N/cm
- tensile strength retention after 50 cycles between 800 and 920% = 59.1 %
- elastic energy retention after 3 hysteresis cycles between zero and 800% = 48.3 %
- Newtonian Index (N.I.) = 1.01.

The composition was similar to that of Example 1, the main variation being the fact that about 50% of the high softening point tackifying resin was substituted by a lower softening point resin and the only plasticizer was the oil contained in CARIFLEX TR-4113 S (12.2% by weight of the composition). Nevertheless it was found that the composition still retained a very high solidification temperature, quick setting as well as optimum elastic and pressure sensitive adhesive properties and excellent processability, so that it was easily possible to extrude and immediately stretch it even to 800%.

### EXAMPLE 3

A different system based on radial SBS was tested, more precisely a blend of one SBS with relatively low hard block content and one SBS with relatively high hard block content. The formulation was as follows:

| | |
|---|---|
| FINAPRENE 415 | 17.7% by weight |
| FINAPRENE 401 | 7.0% |
| FINAPRENE 1205 | 8.0% |
| ZONATAC 115 LITE | 45.8% |
| FORAL 85-E | 6.3% |
| HERCOLYN D-E | 4.0% |
| SHELLFLEX 4510 FC | 11.0% |
| IRGANOX 1010 | 0.2% |

where:
- FINAPRENE 415 and FINAPRENE 401 are radial SBS copolymers available from FINA. Both are supposed to contain less than 20% diblock and to be formed by a "star" structure of four blocks of SB chemically linked in a central point through the butadiene blocks. FINAPRENE 415 contains 40% by weight of block styrene and FINAPRENE 401 contains 22% of block styrene.
- ZONATAC 115 LITE is a hydrocarbon modified terpene tackifying resin with a softening point of 115°C available from Arizona Co. It is supposed to be based on limonene modified with styrene.
- SHELLFLEX 4510 FC is a naphthenic mineral oil, available from SHELL, which is supposed to have an aromatic content < 5%.
The following properties were measured:
- total styrene content = 10.6% by weight of which 10.1% is in blocks
- viscosity at 180°C at 80 sec⁻¹ = 12810 cps.
- intrinsic modulus at 500% elongation = 0.223 MPa (low modulus) .
- elongation at break > 1300%
- rheological setting temperature = 107°C
- 90° peel on PE = 14 N/cm
- tensile strength retention after 50 cycles between 800 and 920% = 50%
- elastic energy retention after 3 hysteresis cycles between zero and 800% = 44.9%
- Newtonian index (N.I.) = 1.04.
The composition showed properties typical of a very good and easily processable elastic, extrudable adhesive material.

### EXAMPLE 4

The following high modulus composition was made with the formulation:

| | |
|---|---|
| VECTOR 4461-D | 44.8% by weight |
| ZONAREZ 7115 LITE | 37% |
| FORAL 85-E | 5% |
| ZONAREZ ALPHA 25 | 3% |
| PRIMOL 352 | 10% |
| IRGANOX 1010 | 0.2% |

where:
- VECTOR 4461-D is a linear SBS copolymer having 43% by weight of styrene and non diblock content available from DEXCO Co.
- ZONAREZ 7115 LITE is a polyterpene tackifying resin, having a softening point of 115°C, derived from limonene, available from ARIZONA Co.
- ZONAREZ ALPHA 25 is a liquid tackifying resin (S.P. = 25°C) derived from alpha-pinene having a very good plasticizing effect. It is available from ARIZONA Co.
- PRIMOL 352 is a plasticizing, paraffinic mineral oil available from EXXON, which is said to contain non aromatics.

The following properties were measured:
- total block styrene content = 19.3% by weight
- viscosity at 180°C at 80 sec⁻¹ = 16810 cps.
- intrinsic modulus at 500% elongation = 1.07 MPa (high modulus)
- elongation at break = 987%
- rheological setting temperature = 111°C
- 90° peel on PE = 6.5 N/cm
- tensile strength retention after 50 cycles between 300 and 345% = 67.5%
- elastic energy retention after 3 hysteresis cycles between zero and 300% = 63.3%
- Newtonian Index (N.I.) = 1.05.
The composition was a good elastic material useful especially at low elongations. It showed acceptable semi-pressure sensitive characteristics so that is can be bonded to materials also at room temperature in the stretched state.

### EXAMPLE 5

The formulation was:

| | |
|---|---|
| VECTOR 4461-D | 54.8% by weight |
| ECR 368 | 35% |
| PRIMOL 352 | 10% |
| IRGANOX 1010 | 0.2% |

where:
- ECR 368 is a hydrogenated hydrocarbon tackifying resin, available from EXXON and having a softening point of 100°C.
The following properties were measured:
- total block styrene content = 23.56% by weight
- viscosity at 180°C at 80 sec⁻¹ = 34000 cps.
- intrinsic modulus at 500% elongation = 1.61 MPa (high modulus)
- elongation at break = 947%
- rheological setting temperature = 114°C - 90° peel on PE = 2.6 N/cm
- tensile strength retention after 50 cycles between 300 and 345% = 62.3%
- elastic energy retention after 3 hysteresis cycles between zero and 300% = 38.3%
- Newtonian Index = 1.05.

The composition was made so to maximize modulus whilst still retaining acceptable elasticity and good adhesivity at temperatures higher than room conditions. Such a material is more conveniently applied in the unstretched state and bonded directly at temperature > 50°C. It gives good elastic return forces even at very low extensions, e.g. modulus at 20% elongation = 0.236 MPa. However, it also works well in the stretched state, e.g. 300% elongation, and shows adhesive properties on PE which are not negligible even at room temperature.

### COMPARATIVE EXAMPLE A

The formulation was:

| | |
|---|---|
| KRATON D1107 | 40.2% by weight |
| WINGTACK 95 | 32.9% |
| IC-145 | 26.5% |
| WESTON 618 | 0.2% |
| IRGANOX 1010 | 0.2% |

where:
- KRATON D1107 is a linear SIS block copolymer available from SHELL containing 14% by weight of styrene.
- WINGTACK 95 is a synthetic polyterpene resin, having a softening point of 95°C available from Goodyear Co.
- IC-145 is a coumarone-indene aromatic resin, having a softening point of 145°C and available from the German Company VFT.
- WESTON 618 is a phosphite based antioxidant available from Borg Warner Co.
- IRGANOX 1010 is as described in Example 1.

This formulation was made in accordance with the teaching of US-A-4 418 123. (Example IV). According to the US patent the composition is said to have completely satisfactory elastic, adhesive and processing properties. The formulation of Comparative Example A has the following differences from Example IV of US-A-4 418 123:
1) The coumarone-indene resin CUMAR LX-509 is not widely available in Europe and the equivalent resin IC-145 was used. The resins are chemically similar but IC-145 has a softening point of 145°C as compared to the figure of 155°C reported for CUMAR LX-509 in the US patent;
2) For practical reasons, the pigment (1.5% titanium dioxide) was omitted. The pigment was presumably present in the original formulation to mask the light brown colour and would be expected to have a negligible effect on adhesive and elastic properties.
The main properties can be summarised as follows:
- total block styrene content = 5.6% by weight
- viscosity at 180°C at 80 sec⁻¹ = 192000 cps
- intrinsic modulus at 500% elongation = 0.365 MPa (low modulus)
- elongation at break > 1400% (1400% was the maximum elongation achievable on the machine used for this determination)
- rheological setting temperature (crossover point of G' and G'') = 145°C - 90° peel on PE = 15.7 N/cm
- tensile strength retention after 50 cycles between 800 and 920% = 34.3%
- elastic energy retention after 3 hysteresis cycles between zero and 800% = 19.8%
- Newtonian Index (N.I.) = 2.03.

It was found that the above formulation had good adhesive, pressure sensitive characteristics as indicated by the US patent in that as measured on PE under the above described conditions, the 90° peel was 15.7 N/cm. However it was also found that both elastic and processing properties for an extrudable material were unsatisfactory. In particular:
- The processability, especially the application under thin strips, was very difficult owing to the extremely high viscosity and the highly non Newtonian rheological behaviour.
- The modulus at 500% elongation was found to be 0.365 MPa and the elongation at break to be > 1400%. However elastic properties were unsatisfactory. In particular under the cyclic deformation test between 800 and 920% the formulation was found to lose 65.7% of its initial tensile strength after 50 cycles and to lose 80.2% of its elastic energy after 3 hysteresis cycles between 0 and 800% making it unsuitable for the elastication of products such as hygienic absorbent articles that are stressed in use many times by subsequent stretchings due to movements of wearer. It is worthy of note that 45% of the loss of tensile strength occurred between the first and the second cycle, confirming an easy and unrecoverable plastic deformation.

### COMPARATIVE EXAMPLE B

The formulation was:

| | |
|---|---|
| TUFPRENE A | 30.0% by weight |
| ESCOREZ CR 368 | 55.0% |
| CATENEX P941 | 10.0% |
| KRISTALEX F100 | 5.0% |

with the addition of 0.2 parts per 100 parts by weight of the above composition of the antioxidant IRGANOX 1010,
where:
- TUFPRENE A is a linear SBS available from Asahi Chemical CO. and containing 40% by weight of styrene. Diblock content is not specified by the manufacturer.
- ESCOREZ CR 368 is a hydrogenated modified hydrocarbon resin available from Exxon having a softening point of 100°C.
- CATENEX P941 is a paraffinic mineral oil available from Shell which is supposed to have an aromatic content < 5% by weight.
- KRISTALEX F 100 is an aromatic resin based on α-methyl styrene and styrene available from Hercules and having a softening point of 100°C.

This formulation was made in accordance with the teaching of EP-A-0424295 (Example V). The formulation of comparative example B has the following difference from Example V of EP-A-0424295:
0.2 parts per 100 parts by weight of the antioxidant IRGANOX 1010 was added to the composition as set out in Example V of EP-A-0424295. As would be apparent to any person skilled in the art, attempting to compound and process the composition exactly as disclosed in EP-A-0424295, i.e. without an antioxidant would undoubtedly have led to thermal degradation of the system. In order to follow the teaching of EP-A-0424295 as closely as possible the antioxidant used in the comparative example A of that document was used.
However, the antioxidant was added at the usual level of 0.2% (this being the level also used in the preceding examples according to the invention) rather than the unusually (and also unnecessary) high level used in Comparative Example A of EP-A-0424295.

The main properties can be summarised as follows:
- total block styrene = 12% by weight
- viscosity at 180°C at 80 sec⁻¹ = 5620 cps
- intrinsic modulus at 500% elongation = 0.204 MPa (low modulus)
- elongation at break > 1300%
- rheological setting temperature (crossover point of G' and G'') = 106°C
- 90° peel on PE = 0.8 N/cm
- tensile strength retention after 50 cycles between 800 and 920% = 21.3%
- elastic energy retention after 3 hysteresis cycles between zero and 800% = 25.0%
- Newtonian Index (N.I.) = 1.16

It was found that processability, as shown by viscosity and NI was acceptable although NI was high for an SBS based composition. However, the formulation had poor pressure sensitive characteristics and the value of 0.8 N/cm for 90° peel shows it to be practically unusable as a low modulus elastic adhesive, intended to be applied in the stretched state, in the assembly of hygienic absorbent articles. Elastic properties were unsatisfactory as indicated by the loss of about 80% of the tensile strength of the composition after 50 cycles of subsequent stretching and of 75% of its elastic energy after 3 hysteresis cycles.

The unsatisfactory properties of the composition may be related to the diblock content of TUFPRENE A. This is not stated by the manufacturer and direct measurement is difficult. However the value provided by the manufacturer for Tensile Set at break measured according to ASTM method D412 is 47%. This compares to much lower values of around 10% or lower quoted for SBS copolymers with a diblock content < 20% by weight. On the other hand SHELL technical literature gives the following figures for Tensile Set at break for copolymers with a high diblock content
- KRATON D-1112 (SIS containing 40% by weight diblock) -20%
- KRATON D-1118X (SBS containing 80% by weight diblock) -40%.
From this, it can be inferred that TUFPRENE A probably has a diblock content well in excess of 40%.

It should be noted that the above results seem to be inconsistent with the results reported in EP-A-0424295 in at least some respects. Thus the 90° peel of 0.8 N/cm reported above compares to 3.7 N/cm for 180° peel derivable from EP-A-0424295. This may be explained at least in part by both the different peel angle, and the compression used in the test (400 g as compared to 2 kg) since the composition is stiff and bonding is very much influenced by compression. It should also be noted that the weight of adhesive per square meter is not specified in EP-A-0424295 and this is extremely important in determining bond strength. The tests used according to the present invention provide a realistic measure of the suitability of the compositions for use in the proposed applications. The poor properties of the composition of EP-A-0424295 may also be related to the combination of a hard SBS (40% styrene) with an aromatic resin at low plasticiser levels (10%).

### EXAMPLE 6

This example relates to the stress/strain diagrams of the compositions of Examples 1 to 5 and Comparative Examples A and B. The elastic hot melt compositions according to the invention should desirably have a stress/strain diagram that is much flatter than a rubber elastic, i.e. even if already under tension further stretching (e.g. due to the movements of the wearer of the absorbent article) cause only a very low increase in modulus and in the tensile strength that is perceived by the wearer. This is especially true for low modulus compositions and can be seen by measuring the average increase in modulus for a given extension. Low modulus compositions, which are typically applied in the already stretched state, were judged as the mean increase in modulus per 100% increase in elongation, by dividing by 8 the total increase in modulus between 0 and 800% elongation (nine times the initial length).

Referring to the low modulus compositions mentioned in the above Examples the results were as follows:

| EXAMPLE NO. | MEAN INCREASE IN MODULUS PER 100% STRETCHING |
|---|---|
| 1 | 0.044 MPa/100% stretching |
| 2 | 0.045 MPa/100% stretching |
| 3 | 0.063 MPa/100% stretching |
| Comparative Example A | 0.099 MPa/100% stretching |
| Comparative Example B | 0.079 MPa/100% stretching |

The high modulus compositions of Examples 4 and 5, which are generally used in the unstretched state or in any case at lower elongations, were judged as mean increase in modulus per 100% increase in elongation between zero and 300% final elongation:

| EXAMPLE NO. | MEAN INCREASE IN MODULUS PER 100% STRETCHING |
|---|---|
| 4 | 0.169 MPa/100% stretching |
| 5 | 0.284 MPa/100% stretching |

As a comparison, a natural rubber vulcanized elastic, used for the leg elastication of diapers, even if applied at much lower extension (typically 220%) showed, between zero and 220%, an average increase in modulus of 0.89 MPa per 100% elongation.

It is possible to compare the behaviour of a natural rubber elastic and of a low modulus composition according to the invention.

In the case of rubber elastic, even limited movements of the wearer that cause for instance a further stretching of the elasticated parts as low as say 10% elongation, will cause a mean increase in modulus of about 0.09 MPa. By using a low modulus composition the increase in modulus will be about 20 times lower and even with the strongest high modulus compositions several times lower so that the movements of the wearer of an absorbent article elasticated by the compositions disclosed in the present invention are much more free. Accordingly, in these applications low modulus and low variation of modulus with strain are a clear advantage.

### COMPARATIVE EXAMPLE C

The formulation was:

| | |
|---|---|
| TUFPRENE A | 30.0% by weight |
| ESCOREZ CR 368 | 55.0% |
| CATENEX P941 | 10.0% |
| KRISTALEX F100 | 5.0% |

with the addition of 0.2 parts per 100 parts by weight of the above composition of the antioxidant IRGANOX 1010,
where:
- TUFPRENE A is a linear SBS available from Asahi Chemical CO. and containing 40% by weight of styrene. Diblock content is not specified by the manufacturer.
- ESCOREZ CR 368 is a hydrogenated modified hydrocarbon resin available from Exxon having a softening point of 100°C.
- CATENEX P941 is a paraffinic mineral oil available from Shell which is supposed to have an aromatic content < 5% by weight.
- KRISTALEX F 100 is an aromatic resin based on α-methyl styrene and styrene available from Hercules and having a softening point of 100°C.

The main properties can be summarised as follows:
- total block styrene = 12% by weight
- viscosity at 180°C at 80 sec⁻¹ = 5620 cps
- modulus at 500% elongation = 0.204 MPa (low modulus)
- elongation at break > 1300%
- rheological setting temperature (crossover point of G' and G'') = 106°C
- loop tack on PE = 0.7 N/cm - 90° peel on PE = 0.8 N/cm
- tensile strength retention after 50 cycles between 800 and 920% = 21.3%
- elastic energy retention after 3 hysteresis cycles between zero and 800% = 25.0%
- Newtonian Index (N.I.) = 1.16

It was found that processability, as shown by viscosity and NI was acceptable although NI was high for an SBS based composition. The formulation had poor pressure sensitive characteristics and values of 0.7 N/cm for loop tack and 0.8 N/cm for 90° peel show it to be practically unusable as a low modulus elastic adhesive, intended to be applied in the stretched state, in the assembly of hygienic absorbent articles. However, when used with the point deactivation technique-as described herein, adhesive properties can be improved to an acceptable level.

## Claims

1. An elastomeric hot melt adhesive composition comprising (i) 10 to 80% by weight of at least one thermoplastic elastomer which is a styrene/butadiene/styrene (SBS) copolymer or a blend of styrene/butadiene/styrene with styrene/isoprene/styrene (SIS) in which SIS is present in an amount equal to or less than 50% by weight of the total block copolymer and which contains less than 40% by weight of the total block copolymer of a block copolymer containing only one styrenic block and one rubbery block per molecule (diblock); and (ii) 20 to 90% by weight of at least one tackifying resin selected from:
hydrocarbon resins;
aliphatic resins;
polyterpene resins;
terpene phenolics;
synthetic C5 resins;
synthetic C5/C9 resins;
rosins and rosin esters;
and totally or partially hydrogenated derivatives thereof; the composition being
**characterised in that**
a) it is capable of bonding, when applied from the molten state, plastic and/or cellulosic materials, with a 90° peel force not lower than 0.5 N/cm;
b) it has a tensile strength retention after 50 cycles of at least 40%;
c) it has a viscosity of 120,000 cps or less at 180°C and an applied shear of 80 sec⁻¹.

2. A composition according to claim 1 which is a low modulus composition having a modulus of 0.5 MPa or less at 500% elongation measured at 23°C under an elongation rate of 500 mm/minutes.

3. A composition according to claim 2 which has a modulus of 0.05 to 0.3 MPa.

4. A composition according to claim 2 or 3 which has a viscosity of 60,000 cps or less.

5. A composition according to claim 1 which is a high modulus composition having a modulus of more than 0.5 MPa at 500% elongation measured at 23°C under an elongation rate of 500 mm/mins.

6. A composition according to claim 5 which has a modulus of 1 MPa to 10 MPa.

7. A composition according to claim 5 or 6 which has a viscosity of 80,000 cps or less.

8. A composition according to any of claims 1 to 7 which has a tensile strength retention after 50 cycles of at least 50%.

9. A composition according to any of claims 1 to 8 wherein the tackifying resin(s) are compatible essentially only with the soft blocks of the styrene block copolymer.

10. A composition according to any of claims 1 to 9 which contains up to 40% by weight of plasticizer(s).

11. A composition according to claim 10 wherein the plasticizer is selected from:
- tackifying resins with a softening point of 50 to 85°C;
- liquid hydrocarbon resins, rosin esters and polyterpene resins with softening points no higher than 30°C;
- paraffinic or naphthenic mineral oils having an aromatic content less than 10% by weight;
- liquid polyisoprenes, depolymerised natural rubbers, polyisobutylene, polybutene or polypropene oils and liquid copolymers thereof.

12. A composition according to claim 1, wherein the at least one tackifying resin is compatible essentially only with the rubbery mid blocks; and the composition also comprises
(iii) 0 to 40% of plasticizer(s); and
( iv) 0 to 20% of an aromatic resin.

13. A composition according to claim 12 wherein the styrenic block copolymer(s) contain from 10 to 50% by weight block styrene.

14. A composition according to any of claims 1 to 13 wherein the tackifying resin(s) have a softening point of 85 to 150°C (Ring and Ball).

15. A composition as claimed in any of claims 1 to 14 which has a loop tack of greater than 2.5 N/cm and a 90° pressure sensitive peel strength of greater than 3 N/cm (separating speed 300 mm/mins).

16. A composition according to claim 15 which has a loop tack of greater than 5 N/cm and a 90° pressure sensitive peel strength greater than 7 N/cm.

17. A composition according to any of claims 1 to 16 which has a true rheological setting temperature of 80°C or more.

18. A composition according to claim 17 which has a true rheological setting temperature of 100°C or more.

19. A composition according to any of claim 1 to 18 having a Newtonian Index (as herein defined) of 1.5 or less.

20. A composition according to claim 19 having a Newtonian Index of 1.05 or less.

21. A composition according to any of claims 12 to 20 which is a low modulus composition having a modulus at 23°C and 500% extension under an elongation rate of 500 mm/mins of 0.05 MPa to 0.5 MPa.

22. A composition according to claim 21 which has a viscosity of 60,000 cps or less.

23. A composition according to claims 21 or 22 containing 15 to 50% by weight of styrenic block copolymer(s).

24. A composition according to any of claims 21 to 23 wherein the styrenic block copolymer(s) are wholly styrene butadiene styrene.

25. A composition according to any of claims 21 to 24 wherein the block styrene content of the styrenic block copolymer(s) is from 10 to 50% by weight.

26. A composition according to claim 25, wherein the block styrenic content is from 20 to 50% by weight.

27. A composition according to any of claims 21 to 26 wherein the final block styrene content in the composition is from 3 to 17% by weight.

28. A composition according to any of claims 21 to 27 wherein the tackifying resin(s) have a Ring and Ball softening point from 100 to 140°C.

29. A composition according to claim 28 wherein the content of tackifying resin(s) is from 20 to 90% by weight.

30. A composition according to any of claims 21 to 29 wherein the composition comprises up to 15% by weight of a high molecular weight rubber having a Mooney viscosity ML(1+4) at 100°C from 30 to 70.

31. A composition according to claim 30 wherein the high molecular weight rubber is a polyisoprene, a polybutadiene, a polyisobutylene, a natural rubber, a butyl rubber, a styrene/butadiene rubber, a styrene/isoprene rubber or a blend of two or more thereof.

32. A composition according to claim 30 or 31 wherein the high molecular weight rubber is a styrene/butadiene rubber in which the styrene is partially distributed in blocks.

33. A composition according to any of claims 21 to 32 wherein the composition comprises at least one of the following plasticizers:
- up to 40% by weight of a tackifying resin with a softening point from 50 to 85°C,
- up to 20% by weight, and preferably up to 15% by weight, of a liquid hydrocarbon resin, rosin ester or polyterpene resin with a softening point not higher than 30°C,
- from 3 to 30% by weight and preferably from 5 to 15% by weight of a paraffinic or naphthenic mineral oil having an aromatic content less than 10% by weight.
- up to 15% by weight of a liquid polyisoprene or depolymerized natural rubber or polyisobutylene, polybutene or polypropene oils and liquid copolymers thereof.

34. A composition according to claim 33 wherein the total plasticizer content is not less than 10% by weight.

35. A composition according to any of claims 21 to 34 wherein the level of aromatic resin is less than 20%.

36. A composition according to claim 35 wherein the level of aromatic resin is zero.

37. A composition according to any of claims 21 to 36 which comprises up to 20% by weight of antioxidants, U.V. inhibitors, pigments and colouring materials and mineral fillers.

38. A composition according to any of claims 12 to 20 which is a high modulus composition having a modulus higher than 0.5 MPa at 23°C and 500% extension under an elongation rate of 500 mm/mins.

39. A composition according to claim 38 having a modulus of 1 MPa to 10 MPa.

40. A composition according claim 38 or 39 wherein the composition has a viscosity of 80000 cps or less at 180°C.

41. A composition according to any of claims 38 to 40 containing 35 to 75% by weight of styrenic block copolymer(s).

42. A composition according to any of claims 38 to 41 wherein the final block styrene content in the composition is from 15 to 30% by weight.

43. A composition according to claim 42 wherein the final block styrene content in the composition is from 15 to 25% by weight.

44. A composition according to any of claims 38 to 43 wherein the styrene block copolymer(s) are wholly styrene butadiene styrene.

45. A composition according to any of claims 38 to 44 wherein the styrene block copolymer has a diblock content not exceeding 25% by weight.

46. A composition according to claim 45 wherein the styrene block copolymer has a diblock content of zero.

47. A composition according to any of claims 38 to 46 wherein the styrenic block copolymer contains from 20 to 50% by weight styrene.

48. A composition according to any of claims 38 to 47 wherein the tackifying resin content is from 20 to 40% by weight.

49. A composition according to any of claims 38 to 48, wherein the composition comprises up to 10% by weight of a high molecular weight rubber having a Mooney viscosity ML(1+4) at 100°C from 30 to 70.

50. A composition according to claim 49, wherein the composition comprises up to 5% by weight of a high molecular weight rubber having a Mooney viscosity ML(1+4) at 100°C from 30 to 70.

51. A composition according to claim 49 or 50 wherein the high molecular weight rubber is a polyisoprene, a polybutadiene, a polyisobutylene, a natural rubber, a butyl rubber, a styrene/butadiene rubber, a styrene/isoprene rubber, or a blend of two or more thereof.

52. A composition according to any *of* claims 49 to 51 wherein the high molecular weight rubber is a styrene/butadiene rubber in which the styrene is partially distributed in blocks.

53. A composition according to any of claims 38 to 52 wherein the composition comprises at least one of the following plasticizers:
- up to 25% by weight of a tackifying resin with a softening point from 50 to 85°C,
- up to 20% by weight, and preferably up to 15% by weight, of a liquid hydrocarbon resin, rosin ester or polyterpene resin with a softening point not higher than 30°C,
- from 3 to 25% by weight and preferably from 5 to 15% by weight of a paraffinic or naphthenic mineral oil having an aromatic content less than 10% by weight.
- up to 15% by weight of a liquid polyisoprene or depolymerized natural rubber or polyisobutylene, polybutene or polypropene oils and liquid copolymers thereof.

54. A composition according to claim 53 wherein the total content of plasticizers is not more than 25% by weight.

55. A composition according to any of claims 36 to 54 wherein the level of aromatic resin is zero.

56. A composition according to any of claims 38 to 55 which comprises up to 20% by weight of antioxidants, U.V. inhibitors, pigments and colouring materials and mineral fillers.

57. A composition according to any of claims 38 to 56 wherein the non-adhesive/non-elastomeric part of the composition does not exceed 50% by weight of the total composition.

58. An elastomeric hot melt adhesive composition as claimed in any of claims 1 to 57 which is in the form of a foam.

59. Threads or strips formed from an elastomeric hot melt adhesive composition as claimed in any of claims 1 to 58.

60. Threads as claimed in claim 59 which have a diameter of from 0.4 mm to 3 mm in the non-stretched state.

61. A process for the production of an adhesive as claimed in claim 58, which comprises foaming the hot melt adhesive composition, extruding the foam produced and cooling the foam.

62. A process as claimed in claim 61 wherein the composition is extruded at a temperature from 130 to 230°C.

63. A process as claimed in claim 61 or 62 wherein the foaming is by chemical or physical means.

64. A process as claimed in claim 63 wherein the physical means comprises an inert gas or inert volatile liquid.

65. A process as claimed in claim 64 wherein the liquid is methylene chloride and the gas is nitrogen or carbon dioxide.

66. A process as claimed in claim 63 wherein the chemical means comprises a chemical blowing agent.

67. A process as claimed in any of claims 61 to 66 wherein the foam is subjected to natural cooling to room temperature.

68. An elasticated absorbent article wherein the elastication is provided by an elastomeric hot melt adhesive composition as claimed in any of claims 1 to 58.

69. An elasticated absorbent article as claimed in claim 68 wherein the absorbent article is a baby diaper, diaper for incontinent adults, an incontinence garment, a sanitary napkin or a pantiliner.

70. An elasticated absorbent article as claimed in claim 69 wherein the elastication is applied to the waistband and/or leg area of the diaper.

71. An elasticated absorbent article as claimed in claim 68 to 70, wherein the elastication is applied during the construction of the article.

72. An elasticated absorbent article as claimed in any of claims 69 to 71 wherein the elastication is in the form of strands, yarns, bands, films, threads or fibers.

73. An elasticated absorbent article as claimed in any of claims 69 to 72 wherein the elastication is in non-linear geometry.

74. An elasticated absorbent article as claimed in any of claims 68 to 73 wherein the elastication is subjected to elastic stretching prior to or on application to the absorbent article.

75. An elasticated absorbent article as claimed in any of claims 68 to 73 wherein the elastication is applied to the absorbent article without having been elastically stretched.

76. An elasticated absorbent article as claimed in any of claims 68 to 75, wherein the elastication is applied to the absorbent article by spraying or fiberization to obtain a network of interconnected short fibers or a network of fibers. having indefinite lengths.

77. An elasticated absorbent article as claimed in claim 76 wherein the fibers have a random or geometrical regular network structure.

## Patentansprüche

1. Elastomere, heiß schmelzende Haftmittelzusammensetzung, umfassend (i) 10 bis 80 Gew.% wenigstens eines thermoplastischen Elastomers, welches ein Styrol/Butadien/Styrol (SBS)-Copolymer oder eine Mischung aus Styrol/Butadien/Styrol mit Styrol/Isopren/Styrol (SIS) ist, in welcher SIS vorhanden ist in einer Menge gleich oder weniger als 50 Gew.% des gesamten Block-Copolymers und welche weniger als 40 Gew.% des gesamten Block-Copolymers eines Block-Copolymers mit nur einem Styrolblock und einem Gummiblock pro Molekül (Diblock) enthält; und (ii) 20 bis 90 Gew.% von wenigstens einem klebrigen Harz, ausgewählt aus:
Kohlenwasserstoffharzen;
alliphatischen Harzen;
Polyterpenharzen;
Terpenphenolen;
synthetischen C5-Harzen;
synthetischen C5/C9-Harzen;
Harzen, Kiefernharzen und Harzestern;
und ganz oder teilweise hydrierten Derivaten davon; wobei die Zusammensetzung **dadurch gekennzeichnet ist, daß**
a) sie in der Lage ist, wenn sie aus dem geschmolzenen Zustand aufgebracht wird, Kunststoff- und/oder Zellulosematerialien mit einer 90°-Abziehkraft von nicht weniger als 0,5 N/cm zu binden;
b) sie eine Zugfestigkeitsretention nach 50 Zyklen von wenigstens 40% hat;
c) sie eine Viskosität von 120.000 cps oder weniger bei 180°C und eine beaufschlagte Scherung von 80 sec⁻¹ hat.

2. Zusammensetzung nach Anspruch 1, welche eine Zusammensetzung mit geringem Modul ist, mit einem Modul von 0,5 MPa oder weniger bei 500% Längung, gemessen bei 23°C unter einer Längungsgeschwindigkeit von 500 mm/min.

3. Zusammensetzung nach Anspruch 2, welche eine Modul von 0,05 bis 0,3 MPa hat.

4. Zusammensetzung nach Anspruch 2 oder 3, welche eine Viskosität von 60.000 cps oder weniger hat.

5. Zusammensetzung nach Anspruch 1, welche eine Zusammensetzung mit hohem Modul ist, mit einem Modul von mehr als 0,5 MPa bei 500% Längung, gemessen bei 23°C unter einer Längungsgeschwindigkeit von 500 mm/min.

6. Zusammensetzung nach Anspruch 5, welche ein Modul von 1 MPa bis 10 MPa hat.

7. Zusammensetzung nach Anspruch 5 oder 6, welche eine Viskosität von 80.000 cps oder weniger hat.

8. Zusammensetzung nach einem der Ansprüche 1 bis 7, welche eine Zugfestigkeitsretention nach 50 Zyklen von wenigstens 50% hat.

9. Zusammensetzung nach einem der Ansprüche 1 bis 8, in welcher das oder die klebrigen Harz(e) im wesentlichen nur mit den weichen Blöcken des Styrolblock-Copolymers kompatibel ist/sind.

10. Zusammensetzung nach einem der Ansprüche 1 bis 9, welche bis zu 40 Gew.% (eines) Weichmacher(s) enthält.

11. Zusammensetzung nach 10, in welcher der Weichmacher ausgewählt ist aus:
- klebrigen Harzen mit einem Erweichungspunkt von 50 bis 85°C;
- flüssigen Kohlenwasserstoffharzen, Harzestern und Polyterpenharzen mit Erweichungspunkten von nicht höher als 30°C;
- paraffinischen oder naphthenischen Mineralölen mit einem Aromatengehalt von weniger als 10 Gew.%;
- flüssigen Polyisoprenen, depolymerisierten natürlichen Gummis, Polyisobutylen, Polybuten- oder Polypropenölen und flüssigen Copolymeren davon.

12. Zusammensetzung nach Anspruch 1, in welcher das wenigstens eine klebrige Harz im wesentlichen nur mit den gummiartigen Mittelblöcken kompatibel ist; und wobei die Zusammensetzung auch umfaßt
(iii) 0 bis 40% (des) Weichmacher(s); und
(iv) 0 bis 20% eines Aromatenharzes.

13. Zusammensetzung nach Anspruch 12, in welchem das/die Styrolblock-Copolymer(e) von 10 bis 50 Gew.% Blockstyrol enthält/enthalten.

14. Zusammensetzung nach einem der Ansprüche 1 bis 13, in welcher das/die klebrige(n) Harz(e) einen Erweichungspunkt von 85 bis 150°C haben (Ring und Ball).

15. Zusammensetzung nach einem der Ansprüche 1 bis 14, welche eine Schlingenhaftung von größer als 2,5 N/cm und eine 90° druckempfindliche Abziehfestigkeit von größer als 3 N/cm hat (Trenngeschwindigkeit 300 mm/min) (beide Werte getestet, wie hierin definiert).

16. Zusammensetzung nach Anspruch 15, welche eine Schlingenhaftung von größer als 5 N/cm und eine 90° druckempfindliche Abziehfestigkeit von größer als 7 N/cm hat (beide Werte getestet, wie hierin definiert).

17. Zusammensetzung nach einem der Ansprüche 1 bis 16, welche eine wirkliche rheologische Fixiertemperatur (wie hierhin definiert) von 80°c oder mehr hat.

18. Zusammensetzung nach Anspruch 17, welche eine wirkliche rheologische Fixiertemperatur von 100°C oder mehr hat.

19. Zusammensetzung nach einem der Ansprüche 1 bis 18, mit einem Newton-Index (wie hier definiert) von 1,5 oder weniger.

20. Zusammensetzung nach Anspruch 19, mit einem Newton-Index von 1,05 oder weniger.

21. Zusammensetzung nach einem der Ansprüche 12 bis 20, welche eine Zusammensetzung mit geringem Modul ist, mit einem Modul bei 23°C und 500% Dehnung unter einer Längungsgeschwindigkeit von 500 mm/min von 0,05 MPa bis 0,5 MPa.

22. Zusammensetzung nach Anspruch 21, welche eine Viskosität von 60.000 cps oder weniger hat.

23. Zusammensetzung nach den Ansprüchen 21 oder 22, mit 15 bis 50 Gew.% Styrolblock-Copolymer(en).

24. Zusammensetzung nach einem der Ansprüche 21 bis 23, in welcher das/die Styrolblock-Copolymer(e) vollständig Styrol/Butadien/Styrol sind.

25. Zusammensetzung nach einem der Ansprüche 21 bis 24, in welcher der Blockstyrolgehalt des/der Styrolblock-Copolymer(e) von 10 bis 50 Gew.% beträgt.

26. Zusammensetzung nach Anspruch 25, in welcher der Blockstyrolgehalt von 20 bis 50 Gew.% beträgt.

27. Zusammensetzung nach einem der Ansprüche 21 bis 26, in welcher der finale Blockstyrolgehalt in der Zusammensetzung von 3 bis 17. Gew.% beträgt.

28. Zusammensetzung nach einem der Ansprüche 21 bis 27, in welcher das/die klebrige(n) Harz(e) einen Ring und Ball Erweichungspunkt von 100 bis 140°C hat/haben.

29. Zusammensetzung nach Anspruch 28, in welcher der Gehalt des/der klebrigen Harz(e) von 20 bis 90 Gew.% beträgt.

30. Zusammensetzung nach einem der Ansprüche 21 bis 29, in welchem die Zusammensetzung bis zu 15 Gew.% eines Gummis mit hohem Molekulargewicht mit einer Mooney-Viskosität ML (1+4) bei 100°C von 30 bis 70 umfaßt.

31. Zusammensetzung nach Anspruch 30, in welcher das Gummi mit hohem Molekulargewicht ein Polyisopren, ein Polybutadien, ein Polyisobutylen, ein natürliches Gummi, ein Butylgummi, ein Styrol/Butadien-Gummi, ein Styrol/Isopren-Gummi oder eine Mischungen aus zwei oder mehreren davon ist.

32. Zusammensetzung nach Anspruch 30 oder 31, in welcher das Gummi mit hohem Molekulargewicht ein Styrol/Butadien-Gummi ist, in welchem das Styrol in den Blöcken partiell verteilt ist.

33. Zusammensetzung nach einem der Ansprüche 21 bis 32, in welcher die Zusammensetzung wenigstens einen der folgenden Weichmacher aufweist:
- bis zu 40 Gew.% eines klebrigen Harzes mit einem Erweichungspunkt von 50 bis 85°C,
- bis zu 20 Gew.%, und vorzugsweise bis zum 15 Gew.%, eines flüssigen Kohlenwasserstoffharzes, Harzesters oder Polyterpenharzes mit einem Erweichungspunkt von nicht höher als 30°C,
- von 3 bis 30 Gew.% und vorzugsweise von 5 bis 15 Gew.% eine paraffinischen oder naphthenischen Mineralöls mit einem Aromatengehalt von weniger als 10 Gew.%,
- bis zum 15 Gew.% eines flüssigen Polyisoprens oder depolymerisierten natürlichen Gummis oder Polyisobutylens, Polybuten- oder Polypropenölen und flüssigen Copolymeren davon.

34. Zusammensetzung nach Anspruch 33, in welcher der gesamte Weichmachergehalt nicht weniger als 10 Gew.% beträgt.

35. Zusammensetzung nach einem der Ansprüche 21 bis 34, in welcher der Anteil von Aromatenharz weniger als 20% beträgt.

36. Zusammensetzung nach Anspruch 35, in welchem der Anteil von Aromatenharz Null ist.

37. Zusammensetzung nach einem der Ansprüche 21 bis 36, welche bis zu 20 Gew.% eines Antioxidanzmittels, UV-Inhibitors, Pigmente und Färbematerialien und mineratlischen Füllstoffen umfaßt.

38. Zusammensetzung nach einem der Ansprüche 12 bis 20, welche eine Zusammesetzung mit hohem Modul ist, mit einem Modul höher als 5,0 MPa bei 23°C und 500% Längung unter einer Längungsgeschwindigkeit von 500 mm/min.

39. Zusammensetzung nach Anspruch 38 mit einem Modul von 1 MPa bis MPa.

40. Zusammensetzung nach Anspruch 38 bis 39, in welcher die Zusammensetzung eine Viskosität von 80.000 cps oder weniger bei 180°C hat.

41. Zusammensetzung nach einem der Ansprüche 38 bis 40, mit 35 bis 75 Gew.% von (einem) Styrolblock-Copolymer(en).

42. Zusammensetzung nach einem der Ansprüche 38 bis 41, in welcher der finale Blockstyrolgehalt in der Zusammensetzung von 15 bis 30 Gew.% beträgt.

43. Zusammensetzung nach Anspruch 12, in welcher der finale Blockstyrolgehalt in der Zusammensetzung von 15 bis 25 Gew.% beträgt.

44. Zusammensetzung nach einem der Ansprüche 38 bis 43, in welcher das/die Styrolblock-Copolymer(e) vollständig Styrol/Butadien/Styrol ist/sind.

45. Zusammensetzung nach einem der Ansprüche 38 bis 44, in welcher das Stryrolblock-Copolymer einen Diblockgehalt von nicht mehr als 25 Gew.% hat.

46. Zusammensetzung nach Anspruch 45, in welcher das Styrolblock-Copolymer einen Diblockgehalt von Null hat.

47. Zusammensetzung nach einem der Ansprüche 38 bis 46, in welcher das Styrolblock-Copolymer von 20 bis 50 Gew.% Styrol enthält.

48. Zusammensetzung nach einem der Ansprüche 38 bis 47, in welcher der klebrige Harzanteil von 20 bis 40 Gew.% beträgt.

49. Zusammensetzung nach einem der Ansprüche 38 bis 48, in welcher die Zusammensetzung bis zu 10 Gew.% eines Gummis mit hohem Molekulargewicht mit einer Mooney-Viskosität ML (1+4) bei 100°C von 30 bis 70 umfaßt.

50. Zusammensetzung nach Anspruch 49, in welcher die Zusammensetzung bis zu 5 Gew.% eines Gummis mit hohem Molekulargewicht mit einer Mooney-Viskosität ML (1+4) bei 100°C von 30 bis 70 umfaßt.

51. Zusammensetzung nach Anspruch 49 oder 50, in welcher das Gummi mit hohem Molekulargewicht ein Polyisopren, ein Polybutadien, ein Polyisobutylen, ein natürliches Gummi, ein Butylgummi, ein Styrol/Butadien-Gummi, ein Styrol/Isopren-Gummi oder ein Gemisch aus zwei oder mehreren davon ist.

52. Zusammensetzung nach einem der Ansprüche 49 bis 51, in welcher das Gummi mit hohem Molekulargewicht ein Styrol/Butadien-Gummi ist, in welchem das Styrol partiell in Blöcken verteilt ist.

53. Zusammensetzung nach einem der Ansprüche 38 bis 52, in welcher die Zusammensetzung wenigstens einen der folgenden Weichmacher aufweist:
- bis zu 25 Gew.% eines klebrigen Harzes mit einem Erweichungspunkt von 50 bis 85°C,
- bis zu 20 Gew.%, und vorzugsweise bis zu 15 Gew.%, eines flüssigen Kohlenwasserstoffharzes, Harzesters oder Polyterpenharzes mit einem Erweichungspunkt von nicht höher als 30°C,
- von 3 bis 25 Gew.%, und vorzugsweise von 5 bis 15 Gew.%, eines paraffinischen oder naphthenischen Mineralöls mit einem Aromatengehalt von weniger als 10 Gew.%,
- bis zu 15 Gew.% eines flüssigen Polyisoprens oder dipolymerisierten natürlichen Gummis oder Polyisobutylen-, Polybuten- oder Polypropenöle und flüssige Copolymere davon.

54. Zusammensetzung nach Anspruch 53, in welcher der gesamte Gehalt von Weichmachern nicht mehr als 25 Gew.% beträgt.

55. Zusammensetzung nach einem der Ansprüche 36 bis 54, in welcher der Anteil des Aromatenharzes Null ist.

56. Zusammensetzung nach einem der Ansprüche 38 bis 55, welche bis zu 20 Gew.% Antioxidanzmittel, UV-Inhibitoren, Pigmente und Färbematerialien und mineralische Füllstoffe umfaßt.

57. Zusammensetzung nach einem der Ansprüche 38 bis 56, in welcher der nicht haftende/nicht elastomere Teil der Zusammensetzung (wie hier definiert) 50 Gew.% der gesamten Zusammensetzung nicht übersteigt.

58. Elastomere, heiß schmelzende Haftmittelzusammensetzung nach einem der Ansprüche 1 bis 57, welche in Form eines Schaumes vorliegt.

59. Fäden oder Streifen aus einer elastomeren, heiß schmelzenden Haftmittelzusammensetzung nach einem der Ansprüche 1 bis 58.

60. Fäden nach Anspruch 59, welche einen Durchmesser von 0,4 mm bis 3 mm in dem nicht gestreckten Zustand haben.

61. Verfahren zur Herstellung eines Haftmittels gemäß Anspruch 58, welches ein Schäumen der heiß schmelzenden Haftmittelzusammensetzung, ein Extrudieren des erfolgten Schaumes und ein Abkühlen des Schaumes umfaßt.

62. Verfahren nach Anspruch 61, in welchem die Zusammensetzung bei einer Temperatur von 130 bis 230°C extrudiert wird.

63. Verfahren nach Anspruch 61 oder 62, in welchem das Schäumen durch chemische oder physikalische Mittel erfolgt.

64. Verfahren nach Anspruch 63, in welchem das physikalische Mittel ein Inertgas oder eine inerte flüchtige Flüssigkeit umfaßt.

65. Verfahren nach Anspruch 64, in welchem die Flüssigkeit Methylenchlorid und das Gas Stickstoff oder Kohlendioxid ist.

66. Verfahren nach Anspruch 63, in welchem das chemisches Mittel ein chemisches Blasmittel umfaßt.

67. Verfahren nach einem der Ansprüche 61 bis 66, in welchem der Schaum einer natürlichen Abkühlung bei Raumtemperatur ausgesetzt wird.

68. Elastisch gemachter absorbierender Artikel, in welchem die Elastikmachung bereit gestellt wird durch eine elastomere, heiß schmelzende Haftmittelzusammensetzung gemäß einem der Ansprüche 1 bis 58.

69. Elastisch gemachter absorbierender Artikel nach Anspruch 68, in welchem der absorbierende Artikel eine Babywindel, eine Windel für inkontinente Erwachsene, eine Inkontinenzwäsche, eine Damenbinde oder eine Höscheneinlage ist.

70. Elastisch gemachter absorbierender Artikel nach Anspruch 69, in welchem die Elastikmachung angewendet ist auf den Taillenband- und/oder Beinbereich der Windel.

71. Elastisch gemachter absorbierender Artikel nach Anspruch 68 bis 70, in welchem die Elastikmachung während der Konstruktion des Artikels aufgebracht wird.

72. Elastisch gemachter absorbierender Artikel nach einem der Ansprüche 69 bis 71, in welchem die Elastikmachung in Form von Strängen, Garnen, Bändern, Filmen, Fäden oder Fasern erfolgt.

73. Elastisch gemachter absorbierender Artikel nach einem der Ansprüche 69 bis 72, in welchem die Elastikmachung in nicht linearer Geometrie vorliegt.

74. Elastisch gemachter absorbierender Artikel nach einem der Ansprüche 68 bis 73, in welchem die Elastikmachung einer elastischen Streckung vor oder bei Aufbringung auf den absorbierenden Artikel unterzogen wird.

75. Elastisch gemachter absorbierender Artikel nach einem der Ansprüche 68 bis 73, in welchem die Elastikmachung an den absorbierenden Artikel angebracht wird, ohne daß diese elastisch gestreckt wurde.

76. Elastisch gemachter absorbierender Artikel nach einem der Ansprüche 68 bis 75, in welchem die Elastikmachung auf den absorbierenden Artikel durch Sprühen oder durch Fasereinstippung aufgebracht wird, um ein Netzwerk aus miteinander verbundenen kurzen Fasern oder ein Netzwerk aus Fasern mit indeviniten Längen zu erhalten.

77. Elastisch gemachter absorbierender Artikel nach Anspruch 76, in welchem die Fasern eine zufällige oder geometrisch regelmäßige Netzstruktur haben.

## Revendications

1. Composition adhésive thermofusible élastomère comprenant (i) 10 à 80 % en poids d'au moins un élastomère thermoplastique qui est un copolymère de styrène/butadiène/styrène (SBS) ou un mélange de styrène/butadiène/styrène avec du styrène/isoprène/styrène (SIS) où SIS est présent selon une quantité égale ou inférieure à 50 % en poids du copolymère séquencé total et qui renferme moins de 40 % en poids du copolymère séquencé total d'un copolymère séquencé contenant seulement une séquence styrénique et une séquence caoutchouteuse par molécule (diséquence), et (ii) 20 à 90 % en poids d'au moins une résine à pouvoir collant choisie parmi :
les résines hydrocarbonées,
les résines aliphatiques,
les résines de polyterpène,
les composés phénoliques terpéniques,
les résines synthétiques en C₅/C₉,
la colophane et les esters de colophane,
et leurs dérivés totalement ou partiellement hydrogénés, la composition étant **caractérisée en ce que** :
a) elle est capable de se lier lorsqu'elle est appliquée aux matériaux cellulosiques et/ou plastiques à l'état fondu avec une force d'arrachement à 90° pas inférieure à 0,5 N/cm ;
b) elle présente une rétention de résistance à la traction après 50 cycles d'au moins 40 % ;
c) elle a une viscosité de 120 000 cps ou moins à 180 °C et un cisaillement appliqué de 80 s⁻¹.

2. Composition selon la revendication 1 qui est une composition à faible module ayant un module de 0,5 MPa ou moins sous un allongement de 500 % mesuré à 23 °C à une vitesse d'allongement de 500 mm/minutes.

3. Composition selon la revendication 2 qui a un module de 0,05 à 0,3 MPa.

4. Composition selon la revendication 2 ou 3 qui a une viscosité de 60 000 cps ou moins.

5. Composition selon la revendication 1 qui est une composition à module élevé ayant un module supérieur à 0,5 MPa sous un allongement de 500 % mesuré à 23 °C à une vitesse d'allongement de 500 mm/min.

6. Composition selon la revendication 5, qui a un module compris entre 1 MPa et 10 MPa.

7. Composition selon la revendication 5 ou 6, qui a une viscosité de 80 000 cps ou moins.

8. Composition selon l'une quelconque des revendications 1 à 7, qui a une rétention de résistance à la traction après 50 cycles au moins de 50%.

9. Composition selon l'une quelconque des revendications 1 à 8, dans laquelle la (les) résine(s) à pouvoir collant n'est(ne sont) compatible(s) essentiellement qu'avec des séquences molles du copolymère séquencé de styrène.

10. Composition selon l'une quelconque des revendications 1 à 9, qui contient jusqu'à 40 % en poids de plastifiant(s).

11. Composition selon la revendication 10, dans laquelle le plastifiant est choisi parmi :
- les résines à pouvoir collant ayant un point de ramollissement de 50 à 85°C;
- les résines hydrocarbonées liquides, les esters de colophane et les résines de polyterpène ayant des points de ramollissement ne dépassant pas 30 °C ;
- les huiles minérales paraffiniques ou naphténiques ayant une teneur en composés aromatiques inférieure à 10 % en poids ;
- les polyisoprènes liquides, les caoutchoucs naturels dépolymérisés, les huiles de polyisobutylène, de polybutène ou de polypropène et leurs copolymères liquides.

12. Composition selon la revendication 1, dans laquelle au moins une résine à pouvoir collant n'est compatible essentiellement qu'avec les séquences moyennes caoutchouteuses ; et la composition comprend aussi :
(iii) 0 à 40 % de plastifiant(s) ; et
(iv) 0 à 20 % d'une résine aromatique.

13. Composition selon la revendication 12, dans laquelle le(s) polymère(s) séquencé(s) styréniques contient(contiennent) de 10 à 50 % en poids de styrène séquencé.

14. Composition selon l'une quelconque des revendications 1 à 13, dans laquelle la(les) résine(s) à pouvoir collant a(ont) un point de ramollissement de 85 à 150 °C (méthode bille et anneau).

15. Composition selon l'une quelconque des revendications 1 à 14, qui a une adhésivité en boucle supérieure à 2,5 N/cm et une résistance à l'arrachement sensible à la pression à 90° supérieure à 3 N/cm (vitesse de séparation 300 mm/min) (les deux valeurs étant déterminées telles qu'elles sont définies ici).

16. Composition selon la revendication 15, qui a une adhésivité en boucle supérieure à 5 N/cm et une résistance à l'arrachement sensible à la pression à 90° supérieure à 7 N/cm (les deux valeurs étant déterminées telles qu'elles sont définies ici).

17. Composition selon l'une quelconque des revendications 1 à 16, qui a une température de prise rhéologique réelle (telle qu'elle est définie ici) de 80 °C ou plus.

18. Composition selon la revendication 17, qui a une température de prise rhéologique réelle de 100 °C ou plus.

19. Composition selon l'une quelconque des revendications 1 à 18, qui a un indice de Newton (tel qu'il est défini ici) de 1,5 ou moins.

20. Composition selon la revendication 19, qui a un indice de Newton de 1,05 ou moins.

21. Composition selon l'une quelconque des revendications 12 à 20, qui est une composition de faible module ayant un module à 23 °C sous un allongement de 500 % à une vitesse d'allongement de 500 mm/min de 0,05 MPa à 0,5 MPa.

22. Composition selon la revendication 21 qui a une viscosité de 60 000 cps ou moins.

23. Composition selon la revendication 21 ou 22, contenant 15 à 50 % en poids de copolymère(s) séquencé(s) styréniques.

24. Composition selon l'une quelconque des revendications 21 à 23, dans laquelle le(s) copolymère(s) séquencé(s) styrénique(s) est(sont) entièrement du styrène butadiène styrène.

25. Composition selon l'une quelconque des revendications 21 à 24, dans laquelle la teneur en styrène séquencé du(des) copolymère(s) séquencé(s) styrénique(s) est comprise entre 10 et 50 % en poids.

26. Composition selon la revendication 25, dans laquelle la teneur en styrène séquencé est comprise entre 20 et 50 % en poids.

27. Composition selon l'une quelconque des revendications 21 à 26, dans laquelle la teneur finale en styrène séquencé dans la composition est comprise entre 3 et 17 % en poids.

28. Composition selon l'une quelconque des revendications 21 à 27, dans laquelle la(les) résines à pouvoir collant a(ont) un point de ramollissement selon la méthode bille et anneau compris entre 100 et 140 °C.

29. Composition selon la revendication 28, dans laquelle le teneur en résine(s) à pouvoir collant est comprise entre 20 et 90 % en poids.

30. Composition selon l'une quelconque des revendications 21 à 29, dans laquelle la composition comprend jusqu'à 15 % en poids d'un caoutchouc de poids moléculaire élevé ayant une viscosité Mooney ML (1+4) à 100 °C de 30 à 70.

31. Composition selon la revendication 30, dans laquelle le caoutchouc de poids moléculaire élevé est un polyisoprène, un polybutadiène, un polyisobutylène, un caoutchouc naturel, un butyl-caoutchouc, un caoutchouc styrène/butadiène, un caoutchouc styrène/isoprène ou un mélange de deux ou plusieurs de ceux-ci.

32. Composition selon la revendication 30 ou 31, dans laquelle le caoutchouc de poids moléculaire élevé est un caoutchouc styrène/butadiène dans lequel le styrène est réparti partiellement en séquences.

33. Composition selon l'une quelconque des revendications 21 à 32, dans laquelle la composition comprend au moins un des plastifiants suivants :
- jusqu'à 40 % en poids d'une résine à pouvoir collant dont le point de ramollissement est compris entre 50 et 85 °C,
- jusqu'à 20 % en poids et, de préférence, jusqu'à 15 % en poids, d'une résine hydrocarbonée liquide, d'ester de colophane ou de résine de polyterpène dont le point de ramollissement ne dépasse pas 30 °C,
- de 3 à 30 % en poids et, de préférence, de 5 à 15 % en poids d'une huile minérale paraffinique ou naphténique ayant une teneur en composés aromatiques inférieure à 10 % en poids,
- jusqu'à 15 % en poids d'un polyisoprène liquide ou de caoutchouc naturel dépolymérisé ou d'huiles de polyisobutylène, de polybutène ou de polypropène et de leurs copolymères liquides.

34. Composition selon la revendication 33, dans laquelle la teneur totale en plastifiant n'est pas inférieure à 10 % en poids.

35. Composition selon l'une quelconque des revendications 21 à 34, dans laquelle le niveau de résine aromatique est inférieur à 20 %.

36. Composition selon la revendication 35, dans laquelle le niveau de résine aromatique est zéro.

37. Composition selon l'une quelconque des revendications 21 à 36, qui comprend jusqu'à 20 % en poids d'antioxydants, d'inhibiteurs d'ultraviolets, de pigments et de matériaux colorants et de charges minérales.

38. Composition selon l'une quelconque des revendications 12 à 20, qui est une composition à module élevé ayant un module supérieur à 0,5 MPa à 23 °C sous un allongement de 500% à une vitesse d'allongement de 500 mm/min.

39. Composition selon la revendication 38 ayant un module de 1 MPa à 10 Mpa.

40. Composition selon la revendication 38 ou 39, dans laquelle la composition a une viscosité de 80 000 cps ou moins à 180 °C.

41. Composition selon l'une quelconque des revendications 38 à 40, contenant 35 à 75 % en poids de copolymère(s) séquencé(s) styrénique(s).

42. Composition selon l'une quelconque des revendications 38 à 41, dans laquelle la teneur finale en styrène séquencé dans la composition est comprise entre 15 et 30 % en poids.

43. Composition selon la revendication 42, dans laquelle la teneur finale en styrène séquencé dans la composition est comprise entre 15 et 25 % en poids.

44. Composition selon l'une quelconque des revendications 38 à 43, dans laquelle le(s) copolymère(s) séquencé(s) de styrène est/sont entièrement du styrène butadiène styrène.

45. Composition selon l'une quelconque des revendications 38 à 44, dans laquelle le copolymère séquencé de styrène a une teneur diséquencée ne dépassant pas 25 % en poids.

46. Composition selon la revendication 45, dans laquelle le copolymère séquencé de styrène a une teneur diséquencée de zéro.

47. Composition selon l'une quelconque des revendications 38 à 46, dans laquelle le copolymère séquencé styrénique contient entre 20 et 50 % en poids de styrène.

48. Composition selon l'une quelconque des revendications 38 à 47, dans laquelle la teneur en résine à pouvoir collant est comprise entre 20 et 40 % en poids.

49. Composition selon l'une quelconque des revendications 38 à 48, dans laquelle la composition comprend jusqu'à 10 % en poids d'un caoutchouc de poids moléculaire élevé ayant une viscosité Mooney ML (1+4) à 100 °C de 30 à 70.

50. Composition selon la revendication 49, dans laquelle la composition comprend jusqu'à 5 % en poids d'un caoutchouc de poids moléculaire élevé ayant une viscosité Mooney ML (1+4) à 100 °C de 30 à 70.

51. Composition selon la revendication 49 ou 50, dans laquelle le caoutchouc de poids moléculaire élevé est un polyisoprène, un polybutadiène, un polyisobutylène, un caoutchouc naturel, un butyl-caoutchouc, un caoutchouc styrène/butadiène, un caoutchouc styrène/isoprène ou un mélange de deux ou plusieurs de ceux-ci.

52. Composition selon l'une quelconque des revendications 49 à 51, dans laquelle le caoutchouc de poids moléculaire élevé est un caoutchouc styrène/butadiène dans lequel le styrène est réparti partiellement en séquences.

53. Composition selon l'une quelconque des revendications 38 à 52, dans laquelle la composition comprend au moins un des plastifiants suivants :
- jusqu'à 25 % en poids de résine à pouvoir collant dont le point de ramollissement est compris entre 50 et 85 °C,
- jusqu'à 20 % en poids et, de préférence, jusqu'à 15 % en poids, d'une résine hydrocarbonée liquide, d'ester de colophane ou de résine de polyterpène dont le point de ramollissement ne dépasse pas 30 °C,
- de 3 à 25 % en poids et, de préférence; de 5 à 15 % en poids d'une huile minérale paraffinique ou naphténique ayant une teneur aromatique inférieure à 10 % en poids,
- jusqu'à 15 % en poids d'un polyisoprène liquide ou de caoutchouc naturel dépolymérisé ou d'huiles de polyisobutylène, de polybutène ou de polypropène et de leurs copolymères liquides.

54. Composition selon la revendication 53, dans laquelle la teneur totale en plastifiants n'est pas supérieure à 25 % en poids.

55. Composition selon l'une quelconque des revendications 36 à 54, dans laquelle le niveau de résine aromatique est zéro.

56. Composition selon l'une quelconque des revendications 38 à 55, qui comprend jusqu'à 20 % en poids d'antioxydants, d'inhibiteurs d'ultraviolets, de pigments et de matériaux colorants et de charges minérales.

57. Composition selon l'une quelconque des revendications 38 à 56, dans laquelle la partie non adhésive/non élastomère de la composition (telle qu'elle est définie ici) ne dépasse pas 50 % en poids de la composition totale.

58. Composition adhésive thermofusible élastomère selon l'une quelconque des revendications 1 à 57 qui se présente sous la forme d'une mousse.

59. Fils ou bandes formé(e)s à partir d'une composition adhésive thermofusible élastomère selon l'une quelconque des revendications 1 à 58.

60. Fils selon la revendication 59, qui ont un diamètre compris entre 0,4 mm et 3 mm dans l'état non étiré.

61. Procédé pour la production d'un adhésif selon la revendication 58, qui comprend le moussage de la composition adhésive thermofusible, l'extrusion de la mousse produite et le refroidissement de la mousse.

62. Procédé selon la revendication 61, dans lequel la composition est extrudée à une température comprise entre 130 et 230 °C.

63. Procédé selon la revendication 61 ou 62, dans lequel le moussage est effectué grâce à des moyens chimiques ou physiques.

64. Procédé selon la revendication 63, dans lequel les moyens physiques comprennent un gaz inerte ou un liquide volatil inerte.

65. Procédé selon la revendication 64, dans lequel le liquide est le chlorure de méthylène et le gaz est l'azote ou le dioxyde de carbone.

66. Procédé selon la revendication 63, dans lequel les moyens chimiques comprennent un agent gonflant chimique:

67. Procédé selon l'une quelconque des revendications 61 à 66, dans lequel la mousse est soumise à un refroidissement naturel à la température ambiante.

68. Article absorbant élastifié, dans lequel l'élastification est effectuée à l'aide d'une composition adhésive thermofusible élastomère selon l'une quelconque des revendications 1 à 58.

69. Article absorbant élastifié selon la revendication 68, dans lequel l'article absorbant est une couche pour bébé, une couche pour adultes incontinents, un vêtement pour l'incontinence, une serviette hygiénique ou une garniture de culotte.

70. Article absorbant élastifié selon la revendication 69, dans lequel l'élastification est appliquée à la bande de ceinture et/ou la zone de jambe de la couche.

71. Article absorbant élastifié selon l'une quelconque des revendications 68 à 70, dans lequel l'élastification est appliquée durant la réalisation de l'article.

72. Article absorbant élastifié selon l'une quelconque des revendications 69 à 71, dans lequel l'élastification se présente sous la forme de brins, de cordons, de bandes, de films, de fils ou de fibres.

73. Article absorbant élastifié selon l'une quelconque des. revendications 69 à 72, dans lequel l'élastification a une géométrie non linéaire.

74. Article absorbant élastifié selon l'une quelconque des revendications 68 à 73, dans lequel l'élastification est soumise à un étirage élastique avant ou lors de l'application à l'article absorbant.

75. Article absorbant élastifié selon l'une quelconque des revendications 68 à 73, dans lequel l'élastification est appliquée à l'article absorbant sans avoir été étiré élastiquement.

76. Article absorbant élastifié selon l'une quelconque des revendications 68 à 75, dans lequel l'élastification est appliquée à l'article absorbant par pulvérisation ou formation de fibres afin d'obtenir un réseau de fibres courtes reliées entre elles ou un réseau de fibres ayant des longueurs indéfinies.

77. Article absorbant élastifié selon la revendication 76, dans lequel les fibres ont une structure de réseau régulière aléatoire ou géométrique.
